# EUROPEAN PATENT APPLICATION

(11) **EP 4 306 874 A1**
(43) Date of publication of application: **17.01.2024**
(21) Application number: 22779834.5
(22) Date of filing: 07.03.2022
(51) Int. Cl.: F25B 21/00

(54) **MAGNETIC REFRIGERATION DEVICE AND REFRIGERATION DEVICE**

(30) Priority: 29.03.2021 JP 2021054794
(71) Applicant: DAIKIN INDUSTRIES, LTD., Osaka 530-0001 (JP)
(72) Inventor: UEDA, Akane, Osaka-shi, Osaka 530-0001 (JP); HIBINO, Hiroshi, Osaka-shi, Osaka 530-0001 (JP); TANAKA, Mitsuhiro, Osaka-shi, Osaka 530-0001 (JP)
(74) Representative: Hoffmann Eitle
(86) International application number: PCT/JP2022/009764
(87) International publication number: WO 2022/209610

(57) **Abstract**

A magnetic field application unit (20) makes a relative movement with respect to magnetic working substances (11) in a first direction. Magnetic poles (24) of the magnetic field application unit (20) are arranged on one side of the magnetic working substance (11) in a second direction orthogonal to the first direction. The magnetic poles (24) of the magnetic field application unit (20) are spaced from each other in a third direction orthogonal to the first and second directions of the magnetic working substance (11).

## Description

### TECHNICAL FIELD

The present disclosure relates to a magnetic refrigerator and a refrigeration apparatus.

### BACKGROUND ART

Patent Document 1 discloses a magnetic heat pump device. This magnetic heat pump device includes multiple material containers arranged in a circumferential direction of a shaft to surround an outer periphery of a built-in yoke. When the built-in yoke is rotated in the circumferential direction, a magnetic field is applied to magnetic working substances (magnetic material) contained in the material containers.

### CITATION LIST

### PATENT DOCUMENT

Patent Document 1: WO 2019/150819

### SUMMARY OF THE INVENTION

### TECHNICAL PROBLEM

In the device of Patent Document 1, a free space containing no magnetic working substance is present between each adjacent pair of the material containers. A magnetic flux flows inside the material containers in the circumferential direction in the device of Patent Document 1. That is, the direction of the rotation of the built-in yoke is the same as the direction of the magnetic flux flowing in the material containers.

Thus, the free space between the adjacent material containers is included in the path of the magnetic flux flowing in the circumferential direction in the material containers. This may possibly increase the magnetic resistance.

An object of the present disclosure is to keep the magnetic resistance from increasing by devising the direction of a magnetic flux flowing through magnetic working substances.

### SOLUTION TO THE PROBLEM

A first aspect of the present disclosure is directed to a magnetic refrigerator including: a magnetic working substance (11); and a magnetic field application unit (20) that makes a relative movement with respect to the magnetic working substance (11) in a first direction and applies a magnetic field to the magnetic working substance (11), wherein the magnetic field application unit (20) has magnetic poles (24) that are arranged on one side of the magnetic working substance (11) in a second direction orthogonal to the first direction and are spaced from each other in a third direction orthogonal to the first and second directions of the magnetic working substance (11).

According to the first aspect, the magnetic field application unit (20) makes a relative movement with respect to the magnetic working substance (11) in the first direction. The magnetic poles (24) of the magnetic field application unit (20) are arranged on one side of the magnetic working substance (11) in the second direction orthogonal to the first direction. The magnetic poles (24) of the magnetic field application unit (20) are spaced from each other in the third direction orthogonal to the first and second directions of the magnetic working substance (11).

In this configuration, the first direction in which the magnetic field application unit (20) makes a relative movement is orthogonal to the third direction in which the magnetic flux flows through the magnetic working substance (11), keeping the magnetic resistance from increasing.

A second aspect of the present disclosure is an embodiment of the magnetic refrigerator of the first aspect. In the second aspect, the relative movement is a relative rotational movement about a predetermined axis, the first direction is a circumferential direction, the second direction is a radial direction, and the third direction is an axial direction, the magnetic working substance (11) and the magnetic poles (24) of the magnetic field application unit (20) are spaced from each other in the radial direction, and the magnetic poles (24) of the magnetic field application unit (20) are spaced from each other in the axial direction.

According to the second aspect, a magnetic flux is allowed to flow in the axial direction of the magnetic working substance (11).

A third aspect of the present disclosure is an embodiment of the magnetic refrigerator of the first aspect. In the third aspect, the relative movement is a relative rotational movement about a predetermined axis, the first direction is a circumferential direction, the second direction is an axial direction, and the third direction is a radial direction, the magnetic working substance (11) and the magnetic poles (24) of the magnetic field application unit (20) are spaced from each other in the axial direction, and the magnetic poles (24) of the magnetic field application unit (20) are spaced from each other in the radial direction.

According to the third aspect, a magnetic flux is allowed to flow in the radial direction of the magnetic working substance (11).

A fourth aspect of the present disclosure is an embodiment of the magnetic refrigerator of the first aspect. In the fourth aspect, the relative movement is a relative linear movement in the first direction, the magnetic working substance (11) and the magnetic poles (24) of the magnetic field application unit (20) are spaced from each other in the second direction, and the magnetic poles (24) of the magnetic field application unit (20) are spaced from each other in the third direction.

According to the fourth aspect, the magnetic refrigerator having the magnetic field application unit (20) that makes a relative linear movement with respect to the magnetic working substance (11) can be provided.

A fifth aspect of the present disclosure is an embodiment of the magnetic refrigerator of any one of the first to fourth aspects. In the fifth aspect, the magnetic working substance (11) is provided with yokes (13) having a higher magnetic permeability than the magnetic working substance (11) at both ends in the third direction.

According to the fifth aspect, when the magnetic flux flows through the yokes (13) at both ends of the magnetic working substance (11) in the third direction, the magnetic field can be uniformly applied to the magnetic working substance (11).

A sixth aspect of the present disclosure is an embodiment of the magnetic refrigerator of any one of the first to fifth aspects. In the sixth aspect, a length in the first direction of a surface of each magnetic pole (24) of the magnetic field application unit (20) facing the magnetic working substance (11) is greater than a length in the first direction of a surface of the magnetic working substance (11) facing the magnetic poles (24) of the magnetic field application unit (20).

According to the sixth aspect, the accuracy of alignment between the magnetic working substance (11) and the magnetic pole (24) of the magnetic field application unit (20) can be lowered without increasing the magnetic resistance.

A seventh aspect of the present disclosure is a refrigeration apparatus including: the magnetic refrigerator (10) of any one of the first to sixth aspects; and a heating medium circuit (2) configured to exchange heat with the magnetic refrigerator (10).

According to the seventh aspect, the refrigeration apparatus including the magnetic refrigerator (10) can be provided.

### BRIEF DESCRIPTION OF THE DRAWINGS

FIG. 1 is a piping system diagram of a refrigeration apparatus of a first embodiment.
FIG. 2 is a plan view illustrating the configuration of a magnetic refrigerator.
FIG. 3 is a cross-sectional view taken along line A-A in FIG. 2 and viewed in the direction of arrows.
FIG. 4 is a side cross-sectional view illustrating a first variation of the first embodiment.
FIG. 5 is a plan view illustrating a second variation of the first embodiment.
FIG. 6 is a cross-sectional view taken along line B-B in FIG. 5 and viewed in the direction of arrows.
FIG. 7 is a side cross-sectional view illustrating a third variation of the first embodiment.
FIG. 8 is a side cross-sectional view illustrating a fourth variation of the first embodiment.
FIG. 9 is a side cross-sectional view illustrating a fifth variation of the first embodiment.
FIG. 10 is a side cross-sectional view illustrating a sixth variation of the first embodiment.
FIG. 11 is a side cross-sectional view illustrating a seventh variation of the first embodiment.
FIG. 12 is a side cross-sectional view illustrating an eighth variation of the first embodiment.
FIG. 13 is a plan view illustrating the configuration of a magnetic refrigerator of a second embodiment.
FIG. 14 is a plan view illustrating the configuration of a magnetic field application unit.
FIG. 15 is a cross-sectional view taken along line C-C in FIG. 13 and viewed in the direction of arrows.
FIG. 16 is a side cross-sectional view illustrating a first variation of the second embodiment.
FIG. 17 is a side cross-sectional view illustrating a second variation of the second embodiment.
FIG. 18 is a side cross-sectional view illustrating a third variation of the second embodiment.
FIG. 19 is a side cross-sectional view illustrating a fourth variation of the second embodiment.
FIG. 20 is a side cross-sectional view illustrating a fifth variation of the second embodiment.
FIG. 21 is a side cross-sectional view illustrating a sixth variation of the second embodiment.
FIG. 22 is a plan view illustrating the configuration of a magnetic refrigerator of a third embodiment.
FIG. 23 is a side cross-sectional view illustrating the configuration of the magnetic refrigerator.
FIG. 24 is a plan view illustrating a state of a magnetic field application unit that has made a linear movement relative to a magnetic working substance.
FIG. 25 is a side cross-sectional view illustrating a first variation of the third embodiment.
FIG. 26 is a side cross-sectional view illustrating a second variation of the third embodiment.
FIG. 27 is a side cross-sectional view illustrating a third variation of the third embodiment.
FIG. 28 is a side cross-sectional view illustrating a fourth variation of the third embodiment.
FIG. 29 is a plan view illustrating the configuration of a magnetic refrigerator of a fourth embodiment.
FIG. 30 is a side cross-sectional view illustrating a first variation of the fourth embodiment.
FIG. 31 is a plan view illustrating the configuration of a magnetic refrigerator of a fifth embodiment.
FIG. 32 is a plan view illustrating the configuration of a magnetic field application unit.
FIG. 33 is a side cross-sectional view illustrating the configuration of a magnetic refrigerator of a sixth embodiment.
FIG. 34 is a plan view illustrating a variation of the sixth embodiment.
FIG. 35 is a cross-sectional view taken along line D-D in FIG. 34 and viewed in the direction of arrows.

### DESCRIPTION OF EMBODIMENTS

### «First Embodiment»

A first embodiment will be described below.

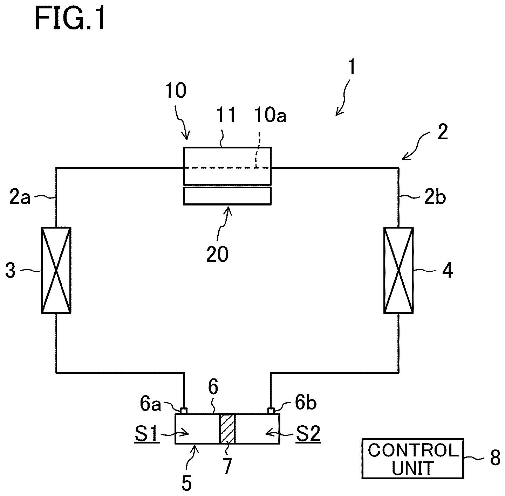

As illustrated in FIG. 1, a refrigeration apparatus (1) includes a heating medium circuit (2). The refrigeration apparatus (1) is applied to, for example, an air conditioner. The heating medium circuit (2) is filled with a heating medium. Examples of the heating medium include a refrigerant, water, and brine, for example.

The refrigeration apparatus (1) includes a low-temperature heat exchanger (3), a high-temperature heat exchanger (4), a pump (5), and a magnetic refrigerator (10). The magnetic refrigerator (10) controls the temperature of the heating medium using a magnetocaloric effect.

The heating medium circuit (2) is a closed loop circuit. The pump (5), the low-temperature heat exchanger (3), the magnetic refrigerator (10), and the high-temperature heat exchanger (4) are sequentially connected to the heating medium circuit (2).

The heating medium circuit (2) includes a low-temperature channel (2a) and a high-temperature channel (2b). The low-temperature channel (2a) connects a temperature control channel (10a) of the magnetic refrigerator (10) and a first port (6a) of the pump (5). The high-temperature channel (2b) connects the temperature control channel (10a) of the magnetic refrigerator (10) and a second port (6b) of the pump (5).

### <Low-Temperature Heat Exchanger and High-Temperature Heat Exchanger>

The low-temperature heat exchanger (3) exchanges heat between the heating medium cooled by the magnetic refrigerator (10) and a predetermined target to be cooled (e.g., a secondary refrigerant or air). The high-temperature heat exchanger (4) exchanges heat between the heating medium heated by the magnetic refrigerator (10) and a predetermined target to be heated (e.g., a secondary refrigerant or air).

### <Pump>

The pump (5) alternately repeats a first action and a second action. The first action conveys the heating medium in the heating medium circuit (2) to the left in FIG. 1. The second action conveys the heating medium in the heating medium circuit (2) to the right in FIG. 1. The pump (5) constitutes a conveying mechanism that causes the heating medium in the heating medium circuit (2) to flow reciprocally.

The pump (5) is constituted of a reciprocating piston pump. The pump (5) includes a pump case (6) and a piston (7).

The piston (7) is disposed to be able to move back and forth inside the pump case (6). The piston (7) divides the inside of the pump case (6) into a first chamber (S1) and a second chamber (S2). The pump case (6) has a first port (6a) and a second port (6b). The first port (6a) communicates with the first chamber (S1). The first port (6a) is connected to the low-temperature channel (2a). The second port (6b) communicates with the second chamber (S2). The second port (6b) is connected to the high-temperature channel (2b). The piston (7) is driven by a drive mechanism (not shown).

When the first action is made, the piston (7) moves toward the first port (6a). The first action reduces the volume of the first chamber (S1) and increases the volume of the second chamber (S2). As a result, the heating medium in the first chamber (S1) is discharged to the low-temperature channel (2a) through the first port (6a). Meanwhile, the heating medium in the high-temperature channel (2b) is sucked into the second chamber (S2) through the second port (6b).

When the second action is made, the piston (7) moves toward the second port (6b). The second action reduces the volume of the second chamber (S2) and increases the volume of the first chamber (S1). As a result, the heating medium in the second chamber (S2) is discharged to the high-temperature channel (2b) through the second port (6b). Meanwhile, the heating medium in the low-temperature channel (2a) is sucked into the first chamber (S 1) through the first port (6a).

### <Control Unit>

The refrigeration apparatus (1) includes a control unit (8). The control unit (8) controls the operation of the pump (5) and the magnetic refrigerator (10) according to a predetermined operation command. The control unit (8) includes a microcomputer and a memory device (specifically, a semiconductor memory) storing software for operating the microcomputer.

### <Magnetic Refrigerator)

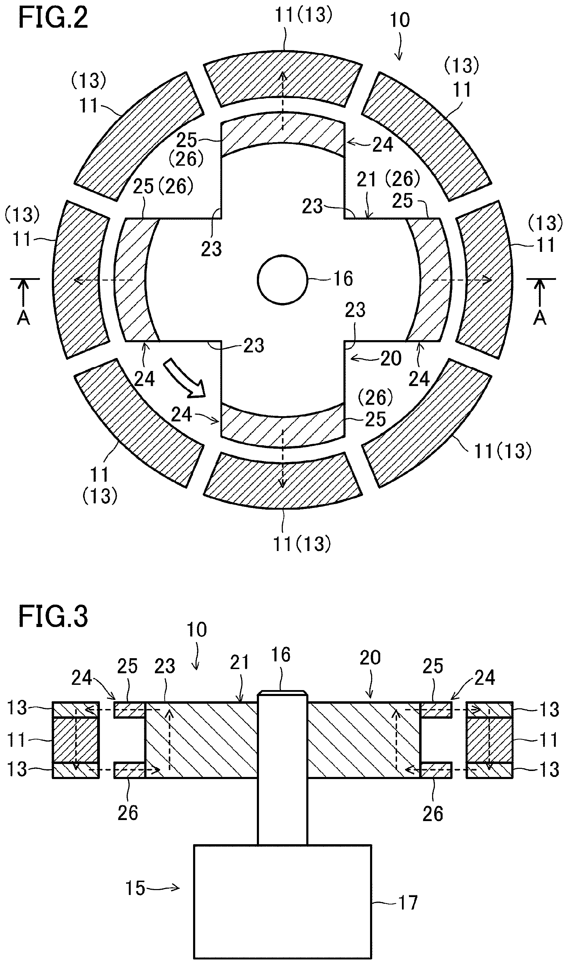

As illustrated in FIGS. 2 and 3, the magnetic refrigerator (10) includes magnetic working substances (11), a magnetic field application unit (20), and a rotation mechanism (15).

The magnetic working substances (11) are housed in material containers (not shown). The material containers are made of a non-magnetic metal material or a resin material.

The magnetic working substances (11) generate heat when a magnetic field is applied to the magnetic working substances (11). The magnetic working substances (11) absorb heat when the magnetic field is removed. The magnetic working substances (11) also generate heat when the intensity of the applied magnetic field increases. The magnetic working substances (11) also absorb heat when the intensity of the applied magnetic field decreases.

Examples of the material of the magnetic working substances (11) include Gd₅(Ge_{0.5}Si_{0.5})₄, La(Fe₁₋ₓSiₓ)₁₃, La(Fe₁₋ₓCoₓSi_{y})₁₃, La(Fe₁₋ₓSiₓ)₁₃H_{y}, and Mn(As_{0.9}Sb_{0.1}), for example.

Multiple magnetic working substances (11) are arranged at intervals in the circumferential direction. In the example shown in FIG. 2, eight magnetic working substances (11) extending in an arc shape in the circumferential direction are arranged at equal intervals in the circumferential direction.

Each magnetic working substance (11) is provided with yokes (13) having a higher magnetic permeability than the magnetic working substance (11). The yokes (13) are provided at both ends of the magnetic working substance (11) in an axial direction (see FIG. 3).

The rotation mechanism (15) includes a shaft (16) and a motor (17). The shaft (16) is connected to the motor (17). The motor (17) rotates the shaft (16). The magnetic field application unit (20) is connected to the shaft (16).

The magnetic field application unit (20) makes a relative movement with respect to the magnetic working substances (11) in a first direction. Specifically, as the motor (17) rotates, the magnetic field application unit (20) rotates about the axis together with the shaft (16). This allows the magnetic field application unit (20) to make a relative rotational movement with respect to the magnetic working substances (11). That is, the first direction is the circumferential direction.

The magnetic field application unit (20) is arranged radially inward of the magnetic working substances (11). The magnetic field application unit (20) applies a magnetic field to the magnetic working substances (11). The magnetic field application unit (20) includes a core (21) and magnetic poles (24).

The core (21) is made of a magnetic material. The shaft (16) is connected to a central portion of the core (21). The core (21) has multiple protrusions (23).

The protrusions (23) protrude radially outward from the central portion of the core (21). The protrusions (23) are arranged at intervals in the circumferential direction. In the example shown in FIG. 2, four protrusions (23) are arranged at equal intervals in the circumferential direction. Each of the protrusions (23) is radially spaced from the magnetic working substance (11).

The magnetic poles (24) of the magnetic field application unit (20) are arranged only on one side of the magnetic working substance (11) in a second direction orthogonal to the first direction. The magnetic working substance (11) and the magnetic poles (24) of the magnetic field application unit (20) are spaced from each other in the radial direction.

Specifically, a first magnet (25) and a second magnet (26) are disposed between the magnetic working substance (11) and the protrusion (23) of the core (21). The first magnet (25) and the second magnet (26) constitute the magnetic poles (24) of the magnetic field application unit (20).

The magnetic poles (24) are spaced from each other in a third direction orthogonal to the first and second directions of the magnetic working substance (11). In the example shown in FIG. 3, the first direction is the circumferential direction, the second direction is the radial direction, and the third direction is the axial direction.

The first magnet (25) and the second magnet (26) constituting the magnetic poles (24) are spaced from each other in the axial direction. The first magnet (25) and the second magnet (26) apply a magnetic field to the magnetic working substance (11) so that a magnetic flux flows in the axial direction of the magnetic working substance (11).

The first magnet (25) is arranged with the N pole (a radially outside part in FIG. 3) closer to the magnetic working substance (11) and the S pole (a radially inside part in FIG. 3) closer to the protrusion (23) of the core (21). The second magnet (26) is arranged with the S pole (a radially inside part in FIG. 3) closer to the magnetic working substance (11) and the N pole (a radially outside part in FIG. 3) closer to the protrusion (23) of the core (21). The positions of the N pole and S pole of each of the first magnet (25) and the second magnet (26) may be reversed.

The first magnet (25) and the second magnet (26) rotate together with the core (21) in the circumferential direction relative to the magnetic working substances (11). When the first magnet (25) and the second magnet (26) are opposed to the magnetic working substance (11), a magnetic flux flows in the axial direction of the magnetic working substance (11). Note that broken arrows indicate the flow of the magnetic flux.

The first magnet (25) and the second magnet (26) are arranged to face the magnetic working substance (11). Specifically, when the magnetic working substance (11) through which the magnetic flux is flowing is viewed in the radial direction, the first magnet (25) and the second magnet (26) are arranged along both axial ends of the magnetic working substance (11). The magnetic field application unit (20) applies a magnetic field to the magnetic working substances (11).

In the magnetic refrigerator (10), the magnetic flux flows from the first magnet (25) toward the upper yoke (13) in FIG. 3. The magnetic flux flows inside the magnetic working substance (11) in the axial direction from the upper yoke (13) to the lower yoke (13). The magnetic flux flows from the lower yoke (13) toward the second magnet (26). The magnetic flux flows inside the protrusion (23) of the core (21) in the axial direction from the second magnet (26) toward the first magnet (25). Thus, the magnetic working substance (11) to which the magnetic field is applied generates heat.

Thereafter, the magnetic field application unit (20) is rotated so that the first magnet (25) and the second magnet (26) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Operation of Refrigeration Apparatus-

Basic operation of the refrigeration apparatus (1) will be described with reference to FIG. 1. The refrigeration apparatus (1) alternately repeats a heating action and a cooling action. The heating action and the cooling action are switched in, for example, about 0.1 second to 1 second cycles.

### <Heating Action>

In the heating action, the pump (5) performs the first action, and the magnetic field application unit (20) performs a first magnetic field application. Specifically, in the heating action, the heating medium is discharged from the first port (6a) of the pump (5). At the same time, a magnetic field is applied to the magnetic working substances (11).

When the pump (5) discharges the heating medium in the first chamber (S1) to the low-temperature channel (2a), the heating medium in the low-temperature channel (2a) flows into the temperature control channel (10a) of the magnetic refrigerator (10). In the refrigeration apparatus (1) during the first magnetic field application, the magnetic working substances (11) radiate heat to the surroundings. Thus, the heating medium flowing through the temperature control channel (10a) is heated by the magnetic working substances (11). The heating medium heated in the temperature control channel (10a) flows into the high-temperature channel (2b) and flows through the high-temperature heat exchanger (4). The high-temperature heating medium in the high-temperature heat exchanger (4) heats a predetermined target to be heated (e.g., a secondary refrigerant or air). The heating medium in the high-temperature channel (2b) is sucked into the second chamber (S2) through the second port (6b) of the pump (5).

### <Cooling Action)

In the cooling action, the pump (5) performs the second action, and the magnetic field application unit (20) performs a second magnetic field application. Specifically, in the heating action, the heating medium is discharged from the second port (6b) of the pump (5), and simultaneously, the magnetic field is removed from the magnetic working substances (11).

When the pump (5) discharges the heating medium in the second chamber (S2) to the high-temperature channel (2b), the heating medium in the high-temperature channel (2b) flows into the temperature control channel (10a) of the magnetic refrigerator (10). In the refrigeration apparatus (1) during the second magnetic field application, the magnetic working substances (11) absorb heat from the surroundings. Thus, the heating medium flowing through the temperature control channel (10a) is cooled by the magnetic working substances (11). The heating medium cooled in the temperature control channel (10a) flows into the low-temperature channel (2a) and flows through the low-temperature heat exchanger (3). The low-temperature heating medium in the low-temperature heat exchanger (3) cools a predetermined target to be cooled (e.g., a secondary refrigerant or air). The heating medium in the low-temperature channel (2a) is sucked into the first chamber (S1) through the first port (6a) of the pump (5).

### -Advantages of First Embodiment-

According to the features of this embodiment, the magnetic field application unit (20) makes a relative movement with respect to the magnetic working substances (11) in the first direction. The magnetic poles (24) of the magnetic field application unit (20) are arranged only on one side of the magnetic working substance (11) in the second direction orthogonal to the first direction. The magnetic poles (24) of the magnetic field application unit (20) are spaced from each other in the third direction orthogonal to the first and second directions of the magnetic working substance (11).

In this configuration, the first direction in which the magnetic field application unit (20) makes a relative movement is orthogonal to the third direction in which the magnetic flux flows through the magnetic working substance (11), keeping the magnetic resistance from increasing.

The magnetic poles (24) of the magnetic field application unit (20) which are arranged on only one side of the magnetic working substance in the second direction make it possible to shorten the magnetic path. This can downsize the entire magnetic refrigerator and improve the magnetic flux density.

According to the features of this embodiment, the relative movement is a relative rotational movement about a predetermined axis. The first direction is the circumferential direction, the second direction is the radial direction, and the third direction is the axial direction. The magnetic working substance (11) and the magnetic poles (24) of the magnetic field application unit (20) are spaced from each other in the radial direction. The magnetic poles (24) of the magnetic field application unit (20) are spaced from each other in the axial direction.

This allows a magnetic flux to flow in the axial direction of the magnetic working substances (11).

According to the features of this embodiment, each magnetic working substance (11) is provided with yokes (13) having a higher magnetic permeability than the magnetic working substance (11) at both ends in the third direction.

Specifically, iron or silicon steel, which is a general material of the yokes (13), has a relative permeability of about 4000 to 5000. On the other hand, the relative permeability of the magnetic working substance (11) is about 1.5 to 3.0.

Thus, when the magnetic flux flows through the yokes (13) at both ends of the magnetic working substance (11) in the third direction, the magnetic field can be uniformly applied to the magnetic working substance (11).

The yokes (13) provided at both ends of the magnetic working substance (11) in the third direction extend in the first direction of the magnetic working substance (11). This reduces a change in magnetic attraction force between the yokes (13) and the magnetic field application unit (20) (so-called cogging torque) when the magnetic field application unit (20) is moved relative to the magnetic working substance (11) in the first direction. As a result, the torque required for the relative movement can be reduced, reducing the size and power consumption of the motor (17).

According to the features of this embodiment, the refrigeration apparatus includes the magnetic refrigerator (10) and the heating medium circuit (2) that exchanges heat with the magnetic refrigerator (10).

This can provide the refrigeration apparatus (1) including the magnetic refrigerator (10).

### -First Variation of First Embodiment-

The magnetic poles (24) of the magnetic field application unit (20) of the first embodiment may be constituted of first protrusions (31a) of a first core (31) and second protrusions (32a) of a second core (32).

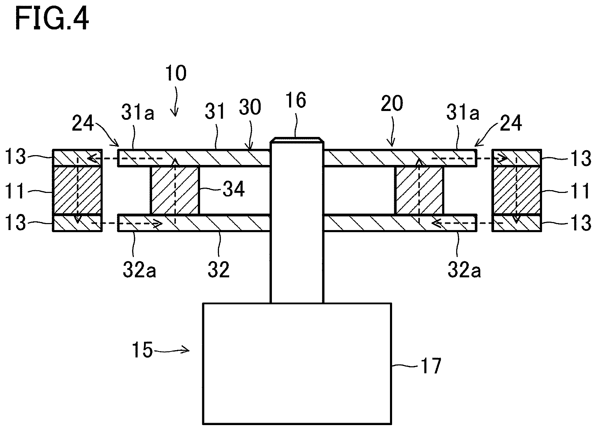

As illustrated in FIG. 4, a core (30) includes the first core (31), the second core (32), and a permanent magnet (34). The first core (31) and the second core (32) are each formed of a plate-shaped member. The first core (31) and the second core (32) are spaced from each other in the axial direction. The permanent magnet (34) is sandwiched between the first core (31) and the second core (32). The permanent magnet (34) has, for example, an annular shape.

In the example shown in FIG. 4, the permanent magnet (34) is arranged with the N pole (an upper part in FIG. 4) closer to the first core (31) and the S pole (a lower part in FIG. 4) closer to the second core (32). The positions of the N pole and S pole of the permanent magnet (34) may be reversed.

The first core (31) is provided with multiple first protrusions (31a) arranged at intervals in the circumferential direction. The second core (32) is provided with multiple second protrusions (32a) arranged at intervals in the circumferential direction. The first core (31) and the second core (32) are formed in the same shape and located at the same position when viewed in the axial direction. The first protrusions (31a) and the second protrusions (32a) constitute magnetic poles (24) of the magnetic field application unit (20).

When the first protrusions (31a) and the second protrusions (32a) are opposed to the magnetic working substances (11), a magnetic flux flows in the axial direction of the magnetic working substances (11). Note that broken arrows indicate the flow of the magnetic flux.

When the magnetic working substance (11) through which the magnetic flux is flowing is viewed in the radial direction, the first protrusion (31a) and the second protrusion (32a) are located at both axial ends of the magnetic working substance (11). The magnetic field application unit (20) applies a magnetic field to the magnetic working substances (11).

Specifically, in the magnetic refrigerator (10), the magnetic flux flows from the permanent magnet (34) toward each of the first protrusions (31a) of the first core (31). The magnetic flux flows from the first protrusion (31a) toward the upper yoke (13) in FIG. 4. The magnetic flux flows inside the magnetic working substance (11) in the axial direction from the upper yoke (13) to the lower yoke (13). The magnetic flux flows from the lower yoke (13) toward the second protrusion (32a) of the second core (32). The magnetic flux flows from the second protrusion (32a) toward the permanent magnet (34). Thus, the magnetic working substance (11) to which the magnetic field is applied generates heat.

Thereafter, the magnetic field application unit (20) is rotated so that the first protrusion (31a) and the second protrusion (32a) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Second Variation of First Embodiment-

The magnetic poles (24) of the magnetic field application unit (20) of the first embodiment may be arranged radially outward of the magnetic working substances (11).

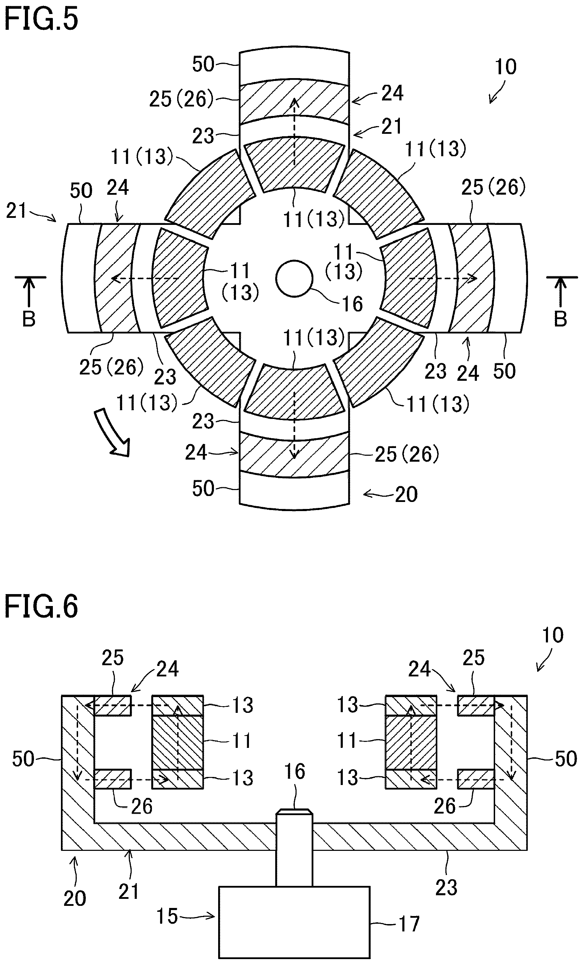

As illustrated in FIGS. 5 and 6, the magnetic field application unit (20) is arranged radially outward of the magnetic working substances (11). The magnetic field application unit (20) includes a core (21) and magnetic poles (24). The core (21) has multiple protrusions (23). The protrusions (23) protrude radially outward from the central portion of the core (21). Each of the protrusions (23) passes below the magnetic working substances (11) and extends radially outward of the magnetic working substances (11) from the radially inside of the magnetic working substances (11) in FIG. 6.

Each of the protrusions (23) has a rising portion (50) at its distal end. The rising portion (50) rises along an outer peripheral surface of the magnetic working substance (11) to face the magnetic working substance (11). The rising portion (50) is radially spaced from the magnetic working substance (11).

A first magnet (25) and a second magnet (26) are disposed between the magnetic working substance (11) and the rising portion (50) of the core (21). The first magnet (25) and the second magnet (26) constitute the magnetic poles (24) of the magnetic field application unit (20). The magnetic working substance (11) and the magnetic poles (24) of the magnetic field application unit (20) are spaced from each other in the radial direction. The first magnet (25) and the second magnet (26) are spaced from each other in the axial direction. When the first magnet (25) and the second magnet (26) are opposed to the magnetic working substance (11), a magnetic flux flows in the axial direction of the magnetic working substance (11). Broken arrows indicate the flow of the magnetic flux.

### -Third Variation of First Embodiment-

The magnetic poles (24) of the magnetic field application unit (20) of the second variation of the first embodiment may be constituted of first protrusions (3 1a) of the first core (31) and second protrusions (32a) of the second core (32).

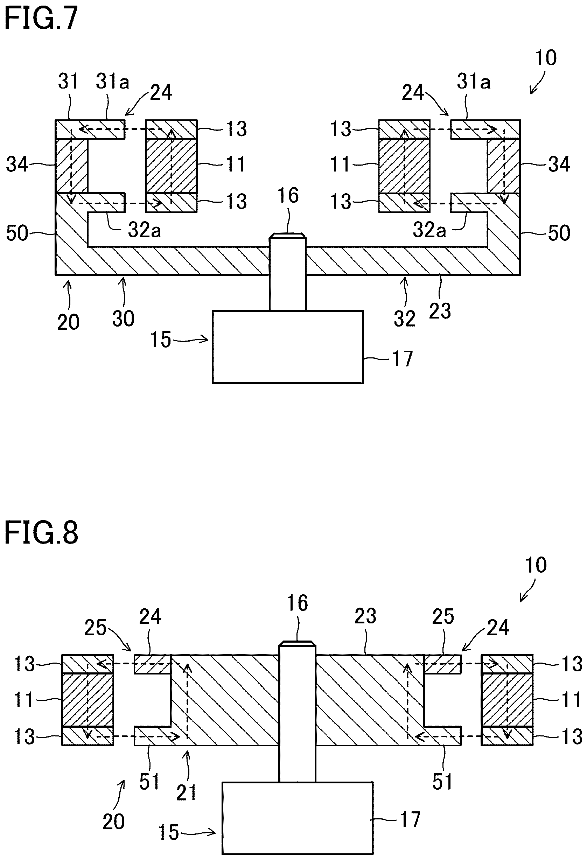

As illustrated in FIG. 7, the core (30) includes a first core (31), a second core (32), and a permanent magnet (34).

The first core (31) is formed of a plate-shaped member. The first core (31) is provided with multiple first protrusions (31a). The first protrusions (31a) are radially spaced from the magnetic working substances (11).

The second core (32) includes multiple protrusions (23) and rising portions (50). Each of the protrusions (23) passes below the magnetic working substances (11) and extends radially outward of the magnetic working substances (11) from the radially inside of the magnetic working substances (11) in FIG. 7. Each of the protrusions (23) has a rising portion (50) at its distal end. The rising portion (50) rises along an outer peripheral surface of the magnetic working substance (11) to face a lower end of the magnetic working substance (11). The rising portion (50) is radially spaced from the magnetic working substance (11).

Each rising portion (50) is provided with a second protrusion (32a). The second protrusion (32a) protrudes radially inward from a distal end of the rising portion (50). The second protrusion (32a) is radially spaced from the magnetic working substance (11).

The first core (31) and the second core (32) are spaced from each other in the axial direction. The permanent magnet (34) is sandwiched between the first core (31) and the second core (32). The first protrusions (31a) and the second protrusions (32a) constitute magnetic poles (24) of the magnetic field application unit (20). When the first protrusions (31a) and the second protrusions (32a) are opposed to the magnetic working substances (11), a magnetic flux flows in the axial direction of the magnetic working substances (11). Broken arrows indicate the flow of the magnetic flux.

### -Fourth Variation of First Embodiment-

The magnetic poles (24) of the magnetic field application unit (20) of the first embodiment may be constituted of a first magnet (25) and a magnetic pole projection (51).

As illustrated in FIG. 8, the magnetic field application unit (20) is arranged radially inward of multiple magnetic working substances (11). The magnetic field application unit (20) includes a core (21) and magnetic poles (24). The core (21) has multiple protrusions (23). The protrusions (23) protrude radially outward from the central portion of the core (21). Each of the protrusions (23) is radially spaced from the magnetic working substance (11).

The first magnet (25) and the magnetic pole projection (51) are disposed between the magnetic working substance (11) and the protrusion (23) of the core (21). The magnetic pole projection (51) protrudes radially outward from a lower end of the protrusion (23) of the core (21). The first magnet (25) and the magnetic pole projection (51) constitute the magnetic poles (24) of the magnetic field application unit (20). The first magnet (25) and the magnetic pole projection (51) are spaced from each other in the axial direction. When the first magnet (25) and the magnetic pole projection (51) are opposed to the magnetic working substance (11), a magnetic flux flows in the axial direction of the magnetic working substance (11). Broken arrows indicate the flow of the magnetic flux.

### -Fifth Variation of First Embodiment-

The magnetic field application unit (20) of the first embodiment may have the magnetic pole (24) arranged radially inward of the magnetic working substance (11), i.e., on one side in the second direction, and the magnetic pole (24) aligned with the magnetic working substance (11) in the axial direction of the magnetic working substance (11), i.e., in the third direction.

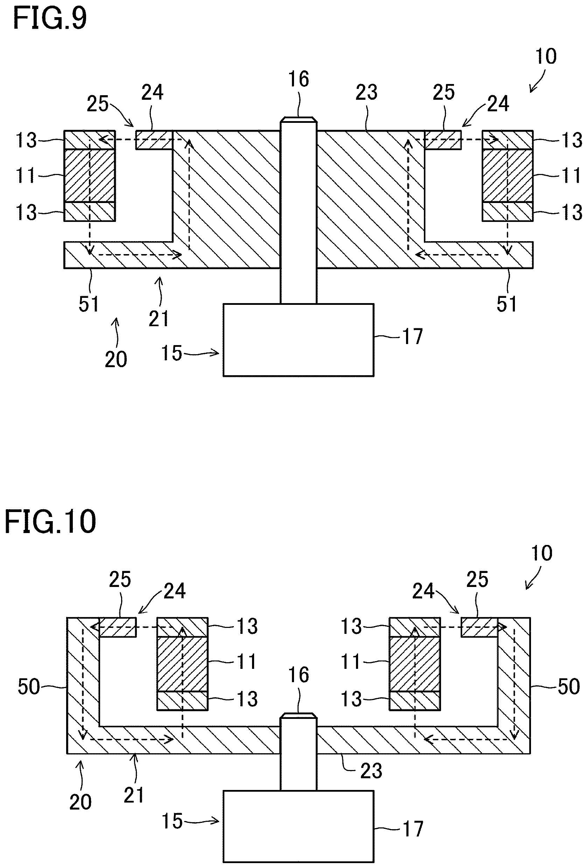

As illustrated in FIG. 9, the magnetic field application unit (20) is arranged radially inward of multiple magnetic working substances (11). The magnetic field application unit (20) includes a core (21) and magnetic poles (24). The core (21) has multiple protrusions (23). The protrusions (23) protrude radially outward from the central portion of the core (21). Each of the protrusions (23) is radially spaced from the magnetic working substance (11).

A first magnet (25) is arranged between the magnetic working substance (11) and the protrusion (23) of the core (21). Each protrusion (23) is provided with a magnetic pole projection (51). The magnetic pole projection (51) projects radially outward from a lower end of the protrusion (23). The magnetic pole projection (51) extends to face a lower surface of the magnetic working substance (11). In other words, the magnetic pole projection (51) extends to face the magnetic working substance (11) in the axial direction. The first magnet (25) and the magnetic pole projection (51) constitute the magnetic poles (24) of the magnetic field application unit (20).

The first magnet (25) and the magnetic pole projection (51) are spaced from each other in the axial direction. When the first magnet (25) and the magnetic pole projection (51) are opposed to the magnetic working substance (11), a magnetic flux flows in the axial direction of the magnetic working substance (11). Broken arrows indicate the flow of the magnetic flux.

The magnetic field application unit (20) has the magnetic pole (24) arranged on one side in the second direction orthogonal to the first direction of the magnetic working substance (11) and the magnetic pole (24) aligned with the magnetic working substance (11) in the third direction. In the example shown in FIG. 9, the first direction is the circumferential direction, the second direction is the radial direction, and the third direction is the axial direction. The one side in the second direction is a radially inner side of the magnetic working substance (11). No magnetic pole (24) is provided on the other side in the second direction (the radially outer side of the magnetic working substance (11) in FIG. 9).

### -Sixth Variation of First Embodiment-

The magnetic field application unit (20) of the first embodiment may have the magnetic pole (24) arranged radially outward of the magnetic working substance (11), i.e., on the other side in the second direction, and the magnetic pole (24) aligned with the magnetic working substance (11) in the axial direction of the magnetic working substance (11), i.e., in the third direction.

As illustrated in FIG. 10, the magnetic field application unit (20) is arranged radially outward of multiple magnetic working substances (11). The magnetic field application unit (20) includes a core (21) and magnetic poles (24). The core (21) has multiple protrusions (23). The protrusions (23) protrude radially outward from the central portion of the core (21). Each of the protrusions (23) passes below the magnetic working substances (11) and extends radially outward of the magnetic working substances (11) from the radially inside of the magnetic working substances (11) in FIG. 10. In other words, the protrusion (23) is arranged to have a surface facing the magnetic working substance (11) in the axial direction in FIG. 10 and extends radially outward of the magnetic working substance (11) from the radially inside of the magnetic working substance (11).

Each of the protrusions (23) has a rising portion (50) at its distal end. The rising portion (50) rises along an outer peripheral surface of the magnetic working substance (11) to face the magnetic working substance (11). The rising portion (50) is radially spaced from the magnetic working substance (11).

A first magnet (25) is arranged between the magnetic working substance (11) and the protrusion (23) of the core (21). A magnetic flux flows through part of the protrusion (23) facing the magnetic working substance (11) in the axial direction. The first magnet (25) and the protrusion (23) constitute the magnetic poles (24) of the magnetic field application unit (20).

The first magnet (25) and the protrusion (23) are spaced from each other in the axial direction. When the first magnet (25) and the protrusion (23) are opposed to the magnetic working substance (11), a magnetic flux flows in the axial direction of the magnetic working substance (11). Broken arrows indicate the flow of the magnetic flux.

The magnetic field application unit (20) has the magnetic pole (24) arranged on the other side of the magnetic working substance (11) in the second direction orthogonal to the first direction and the magnetic pole (24) aligned with the magnetic working substance (11) in the third direction. In the example shown in FIG. 10, the first direction is the circumferential direction, the second direction is the radial direction, and the third direction is the axial direction. The other side in the second direction is a radially outer side of the magnetic working substance (11). No magnetic pole (24) is provided on one side in the second direction (a radially inner side of the magnetic working substance (11) in FIG. 10).

### -Seventh Variation of First Embodiment-

The magnetic field application unit (20) of the first variation of the first embodiment may have the magnetic pole (24) arranged radially inward of the magnetic working substance (11), i.e., on one side in the second direction, and the magnetic pole (24) aligned with the magnetic working substance (11) in the axial direction of the magnetic working substance (11), i.e., in the third direction.

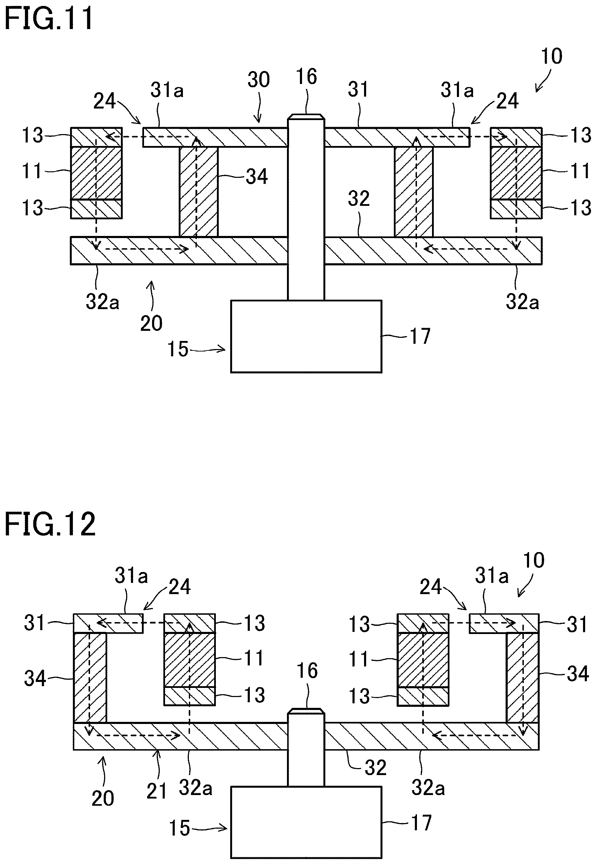

As illustrated in FIG. 11, the core (30) includes a first core (31), a second core (32), and a permanent magnet (34). The first core (31) and the second core (32) are each formed of a plate-shaped member. The first core (31) and the second core (32) are spaced from each other in the axial direction. The permanent magnet (34) is sandwiched between the first core (31) and the second core (32).

The first core (31) is provided with multiple first protrusions (31a) arranged at intervals in the circumferential direction. The first protrusions (31a) are radially spaced from the magnetic working substances (11). The second core (32) is provided with multiple second protrusions (32a) arranged at intervals in the circumferential direction. Each of the second protrusions (32a) extends to face a lower surface of the magnetic working substance (11). The second protrusion (32a) is axially spaced from the magnetic working substance (11). The first protrusions (31a) and the second protrusions (32a) constitute magnetic poles (24) of the magnetic field application unit (20).

When the first protrusions (31a) and the second protrusions (32a) are opposed to the magnetic working substances (11), a magnetic flux flows in the axial direction of the magnetic working substances (11). Broken arrows indicate the flow of the magnetic flux.

The magnetic field application unit (20) has the magnetic pole (24) arranged on one side in the second direction orthogonal to the first direction of the magnetic working substance (11) and the magnetic pole (24) aligned with the magnetic working substance (11) in the third direction. In the example shown in FIG. 11, the first direction is the circumferential direction, the second direction is the radial direction, and the third direction is the axial direction. The one side in the second direction is a radially inner side of the magnetic working substance (11). No magnetic pole (24) is provided on the other side in the second direction (the radially outer side of the magnetic working substance (11) in FIG. 11).

### -Eighth Variation of First Embodiment-

The magnetic field application unit (20) of the first variation of the first embodiment may have the magnetic pole (24) arranged radially outward of the magnetic working substance (11), i.e., on the other side in the second direction, and the magnetic pole (24) aligned with the magnetic working substance (11) in the axial direction of the magnetic working substance (11), i.e., in the third direction.

As illustrated in FIG. 12, the core (30) includes a first core (31), a second core (32), and a permanent magnet (34). The first core (31) and the second core (32) are each formed of a plate-shaped member. The first core (31) and the second core (32) are spaced from each other in the axial direction. The permanent magnet (34) is sandwiched between the first core (31) and the second core (32).

The first core (31) is provided with multiple first protrusions (31a) arranged at intervals in the circumferential direction. The first protrusions (31a) are spaced radially outward from the magnetic working substances (11). The second core (32) is provided with multiple second protrusions (32a) arranged at intervals in the circumferential direction. Each of the second protrusions (32a) passes below the magnetic working substances (11) and extends radially outward of the magnetic working substances (11) from the radially inside of the magnetic working substances (11). In other words, the second protrusion (32a) is arranged to have a surface facing the magnetic working substance (11) in the axial direction and extends radially outward of the magnetic working substance (11) from the radially inside of the magnetic working substance (11). The second protrusion (32a) is axially spaced from the magnetic working substance (11).

A magnetic flux flows through part of the second protrusion (32a) facing the magnetic working substance (11) in the axial direction. The first protrusions (31a) and the second protrusions (32a) constitute magnetic poles (24) of the magnetic field application unit (20). When the first protrusions (31a) and the second protrusions (32a) are opposed to the magnetic working substances (11), a magnetic flux flows in the axial direction of the magnetic working substances (11). Broken arrows indicate the flow of the magnetic flux.

The magnetic field application unit (20) has the magnetic pole (24) arranged on the other side of the magnetic working substance (11) in the second direction orthogonal to the first direction and the magnetic pole (24) aligned with the magnetic working substance (11) in the third direction. In the example shown in FIG. 12, the first direction is the circumferential direction, the second direction is the radial direction, and the third direction is the axial direction. The other side in the second direction is a radially outer side of the magnetic working substance (11). No magnetic pole (24) is provided on one side in the second direction (the radially inner side of the magnetic working substance (11) in FIG. 12).

### -Ninth Variation of First Embodiment-

In the first embodiment, multiple magnetic field application units (20) and multiple magnetic working substances (11) may be arranged in the axial direction and relatively rotated by a single motor (17).

### «Second Embodiment»

A second embodiment will be described below.

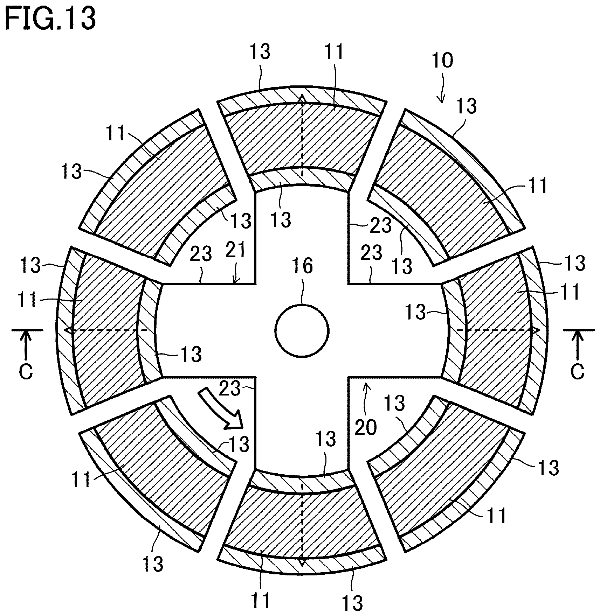

As illustrated in FIG. 13, multiple magnetic working substances (11) are arranged at intervals in the circumferential direction. In the example shown in FIG. 13, eight magnetic working substances (11), each having a substantially fan shape, are arranged at equal intervals in the circumferential direction.

Each magnetic working substance (11) is provided with yokes (13) having a higher magnetic permeability than the magnetic working substance (11). The yokes (13) are provided at both ends of the magnetic working substance (11) in the radial direction.

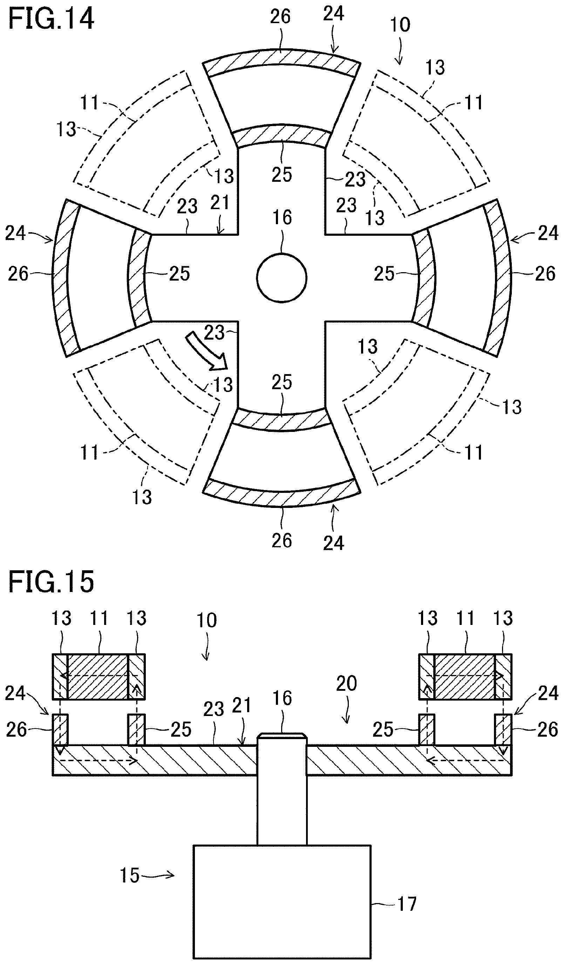

As illustrated in FIG. 14, the magnetic field application unit (20) makes a relative movement with respect to the magnetic working substances (11) in a first direction. Specifically, as the motor (17) rotates, the magnetic field application unit (20) rotates about the axis together with the shaft (16). This allows the magnetic field application unit (20) to make a relative rotational movement with respect to the magnetic working substances (11). That is, the first direction is the circumferential direction.

The magnetic field application unit (20) is axially spaced from the magnetic working substances (11). The magnetic field application unit (20) applies a magnetic field to the magnetic working substances (11). The magnetic field application unit (20) includes a core (21) and magnetic poles (24).

The core (21) is made of a magnetic material. The shaft (16) is connected to a central portion of the core (21). The core (21) has multiple protrusions (23).

The protrusions (23) protrude radially outward from the central portion of the core (21). The protrusions (23) are arranged at intervals in the circumferential direction. In the example shown in FIG. 13, four protrusions (23) are arranged at equal intervals in the circumferential direction. The protrusions (23) are axially spaced from the magnetic working substances (11). Each of the protrusions (23) has a distal end portion formed in a substantially fan shape when viewed in the axial direction.

As illustrated in FIG. 15, the magnetic poles (24) of the magnetic field application unit (20) are arranged only on one side of the magnetic working substance (11) in a second direction orthogonal to the first direction. The magnetic working substance (11) and the magnetic poles (24) of the magnetic field application unit (20) are axially spaced from each other.

Specifically, a first magnet (25) and a second magnet (26) are disposed between the magnetic working substance (11) and the protrusion (23) of the core (21). The first magnet (25) and the second magnet (26) constitute the magnetic poles (24) of the magnetic field application unit (20).

The magnetic poles (24) are spaced from each other in a third direction orthogonal to the first and second directions of the magnetic working substance (11). In the example shown in FIG. 15, the first direction is the circumferential direction, the second direction is the axial direction, and the third direction is the radial direction.

The first magnet (25) and the second magnet (26) constituting the magnetic poles (24) are spaced from each other in the radial direction. The first magnet (25) and the second magnet (26) apply a magnetic field to the magnetic working substance (11) so that a magnetic flux flows in the radial direction of the magnetic working substance (11).

The first magnet (25) is arranged with the N pole (an upper part in FIG. 15) closer to the magnetic working substance (11) and the S pole (a lower part in FIG. 15) closer to the protrusion (23) of the core (21). The second magnet (26) is arranged with the S pole (an upper part in FIG. 15) closer to the magnetic working substance (11) and the N pole (a lower part in FIG. 15) closer to the protrusion (23) of the core (21). The positions of the N pole and S pole of each of the first magnet (25) and the second magnet (26) may be reversed.

The first magnet (25) and the second magnet (26) rotate together with the core (21) in the circumferential direction relative to the magnetic working substances (11). When the first magnet (25) and the second magnet (26) are opposed to the magnetic working substance (11), a magnetic flux flows in the radial direction of the magnetic working substance (11). Note that broken arrows indicate the flow of the magnetic flux.

The first magnet (25) and the second magnet (26) are arranged to face the magnetic working substance (11). Specifically, when the magnetic working substance (11) through which the magnetic flux is flowing is viewed in the axial direction, the first magnet (25) and the second magnet (26) are arranged along both sides of the magnetic working substance (11) in the radial direction. The magnetic field application unit (20) applies a magnetic field to the magnetic working substances (11).

In the magnetic refrigerator (10), the magnetic flux flows from the first magnet (25) toward the radially inside yoke (13) in FIG. 15. The magnetic flux flows inside the magnetic working substance (11) in the radial direction from the radially inside yoke (13) to the radially outside yoke (13). The magnetic flux flows from the radially outside yoke (13) toward the second magnet (26). The magnetic flux flows inside the protrusion (23) of the core (21) in the radial direction from the second magnet (26) toward the first magnet (25). Thus, the magnetic working substance (11) to which the magnetic field is applied generates heat.

Thereafter, the magnetic field application unit (20) is rotated so that the first magnet (25) and the second magnet (26) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Advantages of Second Embodiment-

According to the features of this embodiment, the relative movement is a relative rotational movement about a predetermined axis. The first direction is the circumferential direction, the second direction is the axial direction, and the third direction is the radial direction. The magnetic working substance (11) and the magnetic poles (24) of the magnetic field application unit (20) are axially spaced from each other. The magnetic poles (24) of the magnetic field application unit (20) are spaced from each other in the radial direction.

This allows a magnetic flux to flow in the radial direction of the magnetic working substances (11).

### -First Variation of Second Embodiment-

The magnetic poles (24) of the magnetic field application unit (20) of the second embodiment may be constituted of first projections (35) and second projections (36).

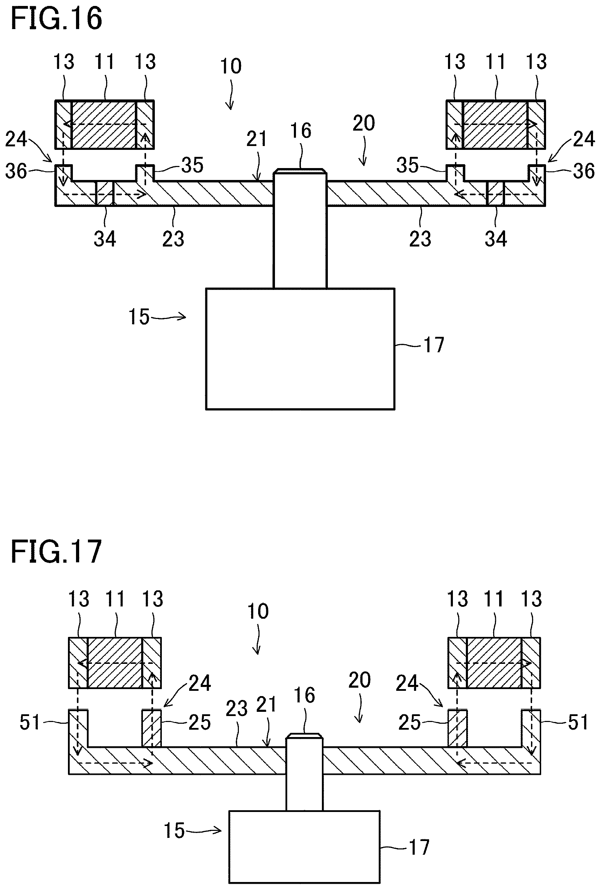

As illustrated in FIG. 16, the magnetic field application unit (20) includes a core (21) and a permanent magnet (34). The core (21) has multiple protrusions (23). A first projection (35) and a second projection (36) are provided at a distal end portion of each of the protrusions (23). The first projection (35) and the second projection (36) constitute the magnetic poles (24) of the magnetic field application unit (20).

The first projection (35) and the second projection (36) project toward the magnetic working substance (11). The first projection (35) and the second projection (36) are radially spaced from each other. The first projection (35) is arranged radially inward of the second projection (36). The permanent magnet (34) is embedded in the protrusion (23) between the first projection (35) and the second projection (36).

In the example shown in FIG. 16, the permanent magnet (34) is arranged with the N pole (a radially inside part in FIG. 16) closer to the first projection (35) and the S pole (a radially outside part in FIG. 16) closer to the second projection (36). The positions of the N pole and S pole of the permanent magnet (34) may be reversed.

When the first projection (35) and the second projection (36) are opposed to the magnetic working substance (11), a magnetic flux flows in the radial direction of the magnetic working substance (11). Note that broken arrows indicate the flow of the magnetic flux.

When the magnetic working substance (11) through which the magnetic flux is flowing is viewed in the axial direction, the first projection (35) and the second projection (36) are arranged along both sides of the magnetic working substance (11) in the radial direction. The magnetic field application unit (20) applies a magnetic field to the magnetic working substances (11).

Specifically, in the magnetic refrigerator (10), the magnetic flux flows from the permanent magnet (34) toward the first projection (35) of the core (21). The magnetic flux flows from the first projection (35) toward the radially inside yoke (13) in FIG. 16. The magnetic flux flows inside the magnetic working substance (11) in the radial direction from the radially inside yoke (13) to the radially outside yoke (13). The magnetic flux flows from the radially outside yoke (13) toward the second projection (36). The magnetic flux flows from the second projection (36) toward the permanent magnet (34). Thus, the magnetic working substance (11) to which the magnetic field is applied generates heat.

Thereafter, the magnetic field application unit (20) is rotated so that the first projection (35) and the second projection (36) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Second Variation of Second Embodiment-

The magnetic poles (24) of the magnetic field application unit (20) of the first embodiment may be constituted of a first magnet (25) and a magnetic pole projection (51).

As illustrated in FIG. 17, the magnetic field application unit (20) includes a core (21) and magnetic poles (24). The core (21) has multiple protrusions (23). The protrusions (23) protrude radially outward from the central portion of the core (21). The protrusions (23) are axially spaced from the magnetic working substances (11).

The first magnet (25) and the magnetic pole projection (51) are disposed between the magnetic working substance (11) and the protrusion (23) of the core (21). The magnetic pole projection (51) projects from the protrusion (23) of the core (21) toward the magnetic working substance (11). The first magnet (25) and the magnetic pole projection (51) constitute the magnetic poles (24) of the magnetic field application unit (20). The first magnet (25) and the magnetic pole projection (51) are spaced from each other in the radial direction. When the first magnet (25) and the magnetic pole projection (51) are opposed to the magnetic working substance (11), a magnetic flux flows in the radial direction of the magnetic working substance (11). Broken arrows indicate the flow of the magnetic flux.

### -Third Variation of Second Embodiment-

The magnetic field application unit (20) of the second embodiment may have the magnetic pole (24) arranged below the magnetic working substance (11) in the axial direction, i.e., on one side in the second direction, and the magnetic pole (24) arranged radially outside of the magnetic working substance (11), i.e., on the other side in the third direction.

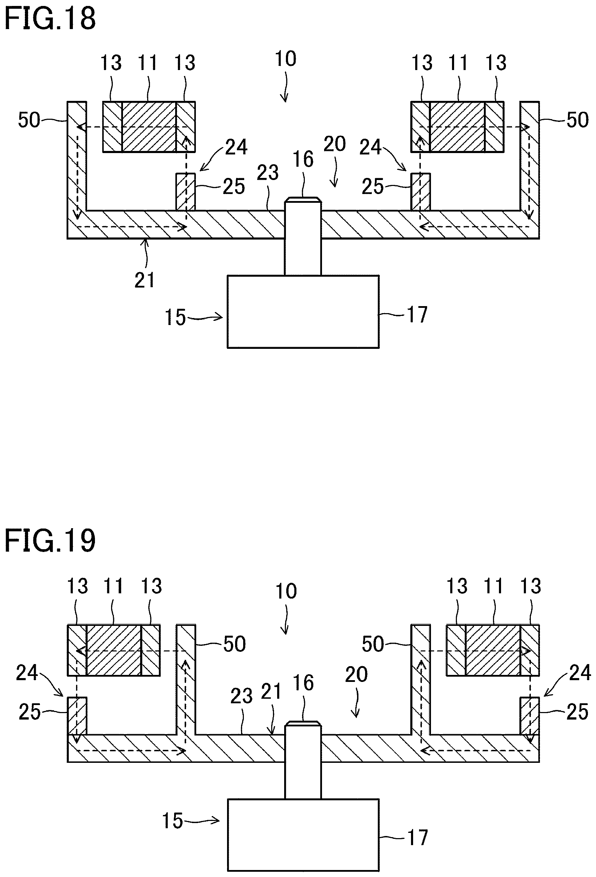

As illustrated in FIG. 18, the magnetic field application unit (20) includes a core (21) and magnetic poles (24). The core (21) has multiple protrusions (23). The protrusions (23) protrude radially outward from the central portion of the core (21). The protrusions (23) are axially spaced from the magnetic working substances (11).

A first magnet (25) is arranged between the magnetic working substance (11) and the protrusion (23) of the core (21). Each of the protrusions (23) passes below the magnetic working substances (11) and extends radially outward of the magnetic working substances (11) from the radially inside of the magnetic working substances (11). Each of the protrusions (23) has a rising portion (50). The rising portion (50) extends along an outer peripheral surface of the magnetic working substance (11) to face the magnetic working substance (11) in the radial direction. The rising portion (50) is radially spaced from the magnetic working substance (11).

A magnetic flux flows through part of the rising portion (50) facing the outer peripheral surface of the magnetic working substance (11). The first magnet (25) and the rising portion (50) constitute the magnetic poles (24) of the magnetic field application unit (20). When the first magnet (25) and the rising portion (50) are opposed to the magnetic working substance (11), a magnetic flux flows in the radial direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction and the magnetic pole (24) arranged on the other side of the magnetic working substance (11) in the third direction. In the example shown in FIG. 18, the first direction is the circumferential direction, the second direction is the axial direction, and the third direction is the radial direction. The one side in the second direction is the lower side of the magnetic working substance (11) in the axial direction. No magnetic pole (24) is provided on the other side in the second direction (the axially upper side of the magnetic working substance (11) in FIG. 18). The other end in the third direction is the radially outer side of the magnetic working substance (11). No magnetic pole (24) is provided on one side in the third direction (the radially inner side of the magnetic working substance (11) in FIG. 18).

### -Fourth Variation of Second Embodiment-

The magnetic field application unit (20) of the second embodiment may have the magnetic pole (24) arranged on the lower side of the magnetic working substance (11) in the axial direction, i.e., on one side in the second direction, and on the radially inner side of the magnetic working substance (11), i.e., on one side in the third direction.

As illustrated in FIG. 19, the magnetic field application unit (20) is axially spaced from the magnetic working substances (11). The magnetic field application unit (20) includes a core (21) and magnetic poles (24). The core (21) has multiple protrusions (23). The protrusions (23) protrude radially outward from the central portion of the core (21). The protrusions (23) are axially spaced from the magnetic working substances (11).

A first magnet (25) is arranged between the magnetic working substance (11) and the protrusion (23) of the core (21). Each of the protrusions (23) has a rising portion (50). The rising portion (50) extends along an inner peripheral surface of the magnetic working substance (11) to face the magnetic working substance (11) in the radial direction. The rising portion (50) is radially spaced from the magnetic working substance (11).

A magnetic flux flows through part of the rising portion (50) facing the inner peripheral surface of the magnetic working substance (11). The first magnet (25) and the rising portion (50) constitute the magnetic poles (24) of the magnetic field application unit (20). When the first magnet (25) and the rising portion (50) are opposed to the magnetic working substance (11), a magnetic flux flows in the radial direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction and the magnetic pole (24) arranged on one side of the magnetic working substance (11) in the third direction. In the example shown in FIG. 19, the first direction is the circumferential direction, the second direction is the axial direction, and the third direction is the radial direction. The one side in the second direction is the lower side of the magnetic working substance (11) in the axial direction. No magnetic pole (24) is provided on the other side in the second direction (the axially upper side of the magnetic working substance (11) in FIG. 19). The one side in the third direction is a radially inner side of the magnetic working substance (11). No magnetic pole (24) is provided on the other side in the third direction (the radially outer side of the magnetic working substance (11) in FIG. 19).

### -Fifth Variation of Second Embodiment-

The magnetic field application unit (20) of the first variation of the second embodiment may have the magnetic pole (24) arranged on the lower side of the magnetic working substance (11) in the axial direction, i.e., on one side in the second direction, and the magnetic pole (24) arranged radially outside of the magnetic working substance (11), i.e., on the other side in the third direction.

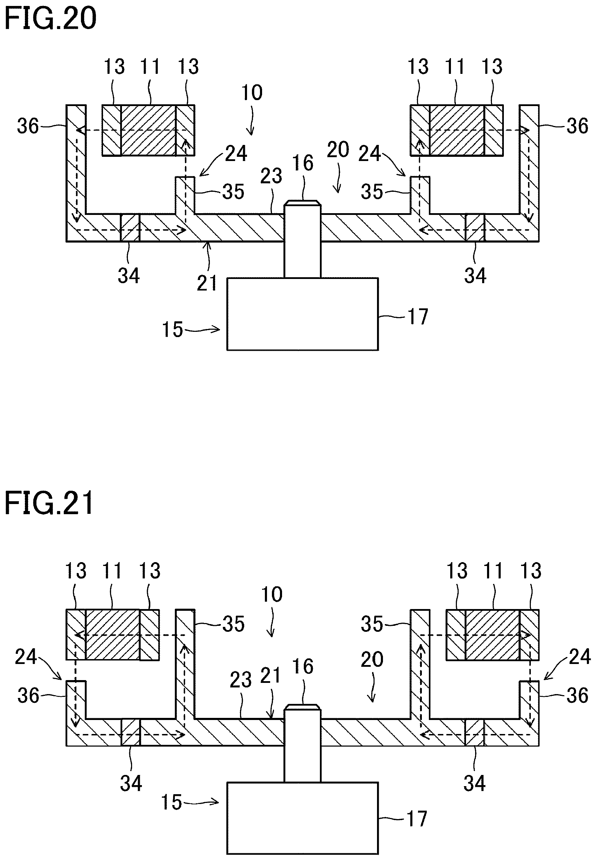

As illustrated in FIG. 20, the magnetic field application unit (20) includes a core (21) and a permanent magnet (34). The core (21) has multiple protrusions (23). Each of the protrusions (23) passes below the magnetic working substances (11) and extends radially outward of the magnetic working substances (11) from the radially inside of the magnetic working substances (11). Each of the protrusions (23) includes a first projection (35) and a second projection (36).

The first projection (35) and the second projection (36) are radially spaced from each other. The first projection (35) is arranged radially inward of the second projection (36). The permanent magnet (34) is embedded in the protrusion (23) between the first projection (35) and the second projection (36).

The first projection (35) is arranged below the magnetic working substance (11). The second projection (36) extends from the protrusion (23) along an outer peripheral surface of the magnetic working substance (11) to face the magnetic working substance (11) in the radial direction. The second projection (36) is radially spaced from the magnetic working substance (11). A magnetic flux flows through part of the second projection (36) facing the outer peripheral surface of the magnetic working substance (11). The first projection (35) and the second projection (36) constitute the magnetic poles (24) of the magnetic field application unit (20).

When the first projection (35) and the second projection (36) are opposed to the magnetic working substance (11), a magnetic flux flows in the radial direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction and the magnetic pole (24) arranged on the other side of the magnetic working substance (11) in the third direction. In the example shown in FIG. 20, the first direction is the circumferential direction, the second direction is the axial direction, and the third direction is the radial direction. The one side in the second direction is the lower side of the magnetic working substance (11) in the axial direction. No magnetic pole (24) is provided on the other side in the second direction (the axially upper side of the magnetic working substance (11) in FIG. 20). The other end in the third direction is the radially outer side of the magnetic working substance (11). No magnetic pole (24) is provided on one side in the third direction (the radially inner side of the magnetic working substance (11) in FIG. 20).

### -Sixth Variation of Second Embodiment-

The magnetic field application unit (20) of the first variation of the second embodiment may have the magnetic pole (24) arranged on the lower side of the magnetic working substance (11) in the axial direction, i.e., on one side in the second direction, and on the radially inner side of the magnetic working substance (11), i.e., on one side in the third direction.

As illustrated in FIG. 21, the magnetic field application unit (20) includes a core (21) and a permanent magnet (34). The core (21) has multiple protrusions (23). The protrusions (23) are axially spaced from the magnetic working substances (11).

Each of the protrusions (23) includes a first projection (35) and a second projection (36). The first projection (35) and the second projection (36) are radially spaced from each other. The first projection (35) is arranged radially inward of the second projection (36). The permanent magnet (34) is embedded in the protrusion (23) between the first projection (35) and the second projection (36).

The first projection (35) extends from the protrusion (23) along an outer peripheral surface of the magnetic working substance (11) to face the magnetic working substance (11) in the radial direction. The first projection (35) is radially spaced from the magnetic working substance (11). A magnetic flux flows through part of the first projection (35) facing the outer peripheral surface of the magnetic working substance (11). The second projection (36) is arranged below the magnetic working substance (11). The first projection (35) and the second projection (36) constitute the magnetic poles (24) of the magnetic field application unit (20).

When the first projection (35) and the second projection (36) are opposed to the magnetic working substance (11), a magnetic flux flows in the radial direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction and the magnetic pole (24) arranged on the other side of the magnetic working substance (11) in the third direction. In the example shown in FIG. 21, the first direction is the circumferential direction, the second direction is the axial direction, and the third direction is the radial direction. The one side in the second direction is the lower side of the magnetic working substance (11) in the axial direction. No magnetic pole (24) is provided on the other side in the second direction (the axially upper side of the magnetic working substance (11) in FIG. 21). The one side in the third direction is a radially inner side of the magnetic working substance (11). No magnetic pole (24) is provided on the other side in the third direction (the radially outer side of the magnetic working substance (11) in FIG. 21).

### -Seventh Variation of Second Embodiment-

In the second embodiment, multiple magnetic field application units (20) and multiple magnetic working substances (11) may be arranged in the axial direction and relatively rotated by a single motor (17). Alternatively, the multiple magnetic field application units (20) and the multiple magnetic working substances (11) may be arranged in the radial direction and relatively rotated by a single motor (17).

### «Third Embodiment»

A third embodiment will be described below.

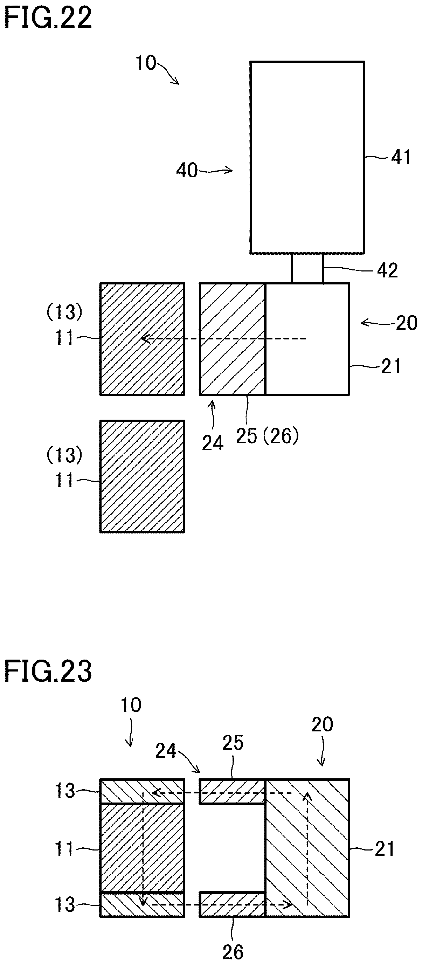

As illustrated in FIG. 22, a magnetic refrigerator (10) includes magnetic working substances (11), a magnetic field application unit (20), and a linear motion mechanism (40).

The linear motion mechanism (40) includes a cylinder (41) and a cylinder rod (42). The cylinder rod (42) moves back and forth in an axial direction relative to the cylinder (41). The magnetic field application unit (20) is connected to the cylinder rod (42).

The magnetic field application unit (20) makes a relative movement with respect to the magnetic working substances (11) in a first direction. Specifically, as the cylinder (41) is driven, the magnetic field application unit (20) linearly moves in the first direction together with the cylinder rod (42). This allows the magnetic field application unit (20) to make a relative linear movement with respect to the magnetic working substances (11). That is, the first direction is the axial direction of the cylinder rod (42).

Two magnetic working substances (11) are arranged apart from each other in the first direction. The magnetic working substances (11) are spaced from the magnetic field application unit (20) in a second direction orthogonal to the first direction (a left-right direction in FIG. 22).

Each magnetic working substance (11) is provided with yokes (13) having a higher magnetic permeability than the magnetic working substance (11). The yokes (13) are provided at both ends of the magnetic working substance (11) in a third direction orthogonal to the first and second directions, i.e., a vertical direction in FIG. 23.

The magnetic field application unit (20) applies a magnetic field to the magnetic working substances (11). The magnetic field application unit (20) includes a core (21) and magnetic poles (24). The core (21) is made of a magnetic material. The cylinder rod (42) is connected to the core (21).

As also illustrated in FIG. 23, the magnetic poles (24) of the magnetic field application unit (20) are arranged on one side of the magnetic working substance (11) in the second direction (the left-right direction in FIG. 23). The magnetic working substance (11) and the magnetic poles (24) of the magnetic field application unit (20) are spaced from each other in the second direction.

The magnetic poles (24) of the magnetic field application unit (20) are spaced from each other in the third direction of the core (21), i.e., the vertical direction in FIG. 23. Specifically, a first magnet (25) and a second magnet (26) are disposed between the magnetic working substance (11) and the core (21). The first magnet (25) and the second magnet (26) are spaced from each other in the third direction. The first magnet (25) and the second magnet (26) constitute the magnetic poles (24) of the magnetic field application unit (20).

The first magnet (25) and the second magnet (26) apply a magnetic field to the magnetic working substance (11) so that a magnetic flux flows in the third direction of the magnetic working substance (11).

The first magnet (25) is arranged with the N pole (a left part in FIG. 23) closer to the magnetic working substance (11) and the S pole (a right part in FIG. 23) closer to the core (21). The second magnet (26) is arranged with the S pole (a left part in FIG. 23) closer to the magnetic working substance (11) and the N pole (a right part in FIG. 23) closer to the core (21). The positions of the N pole and S pole of each of the first magnet (25) and the second magnet (26) may be reversed.

The first magnet (25) and the second magnet (26) linearly move together with the core (21) in the first direction relative to the magnetic working substances (11). When the first magnet (25) and the second magnet (26) are opposed to the magnetic working substance (11), a magnetic flux flows in the third direction of the magnetic working substance (11). Note that broken arrows indicate the flow of the magnetic flux.

The first magnet (25) and the second magnet (26) are arranged to face the magnetic working substance (11). Specifically, when the magnetic working substance (11) through which the magnetic flux is flowing is viewed in the second direction, the first magnet (25) and the second magnet (26) are arranged along both ends of the magnetic working substance (11) in the third direction. The magnetic field application unit (20) applies a magnetic field to the magnetic working substances (11).

In the magnetic refrigerator (10), the magnetic flux flows from the first magnet (25) toward the upper yoke (13) in FIG. 23. The magnetic flux flows inside the magnetic working substance (11) in the third direction from the upper yoke (13) to the lower yoke (13). The magnetic flux flows from the lower yoke (13) toward the second magnet (26). The magnetic flux flows inside the core (21) in the third direction from the second magnet (26) toward the first magnet (25). Thus, the magnetic working substance (11) to which the magnetic field is applied generates heat.

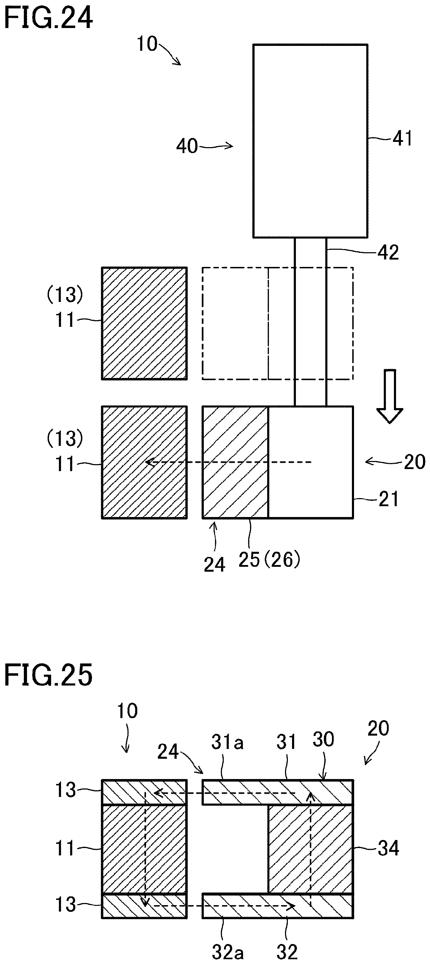

Thereafter, as illustrated in FIG. 24, the magnetic field application unit (20) is linearly moved so that the first magnet (25) and the second magnet (26) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Advantages of Third Embodiment-

According to the features of this embodiment, the relative movement is a relative linear movement in the first direction. The magnetic working substance (11) and the magnetic poles (24) of the magnetic field application unit (20) are spaced from each other in the second direction. The magnetic poles (24) of the magnetic field application unit (20) are spaced from each other in the third direction.

This can provide the magnetic refrigerator that allows the magnetic field application unit (20) to make the linear movement relative to the magnetic working substances (11).

### -First Variation of Third Embodiment-

The magnetic poles (24) of the magnetic field application unit (20) of the third embodiment may be constituted of a first protrusion (31a) of a first core (31) and a second protrusion (32a) of a second core (32).

As illustrated in FIG. 25, the core (30) includes a first core (31), a second core (32), and a permanent magnet (34). The first core (31) and the second core (32) are each formed of a plate-shaped member. The first core (31) and the second core (32) are spaced from each other in the third direction (the vertical direction in FIG. 25). The permanent magnet (34) is sandwiched between the first core (31) and the second core (32).

In the example shown in FIG. 25, the permanent magnet (34) is arranged with the N pole (an upper part in FIG. 25) closer to the first core (31) and the S pole (a lower part in FIG. 25) closer to the second core (32). The positions of the N pole and S pole of the permanent magnet (34) may be reversed.

The first core (31) is provided with a first protrusion (31a). The second core (32) is provided with a second protrusion (32a). The first core (31) and the second core (32) are formed in the same shape and located at the same position when viewed in the axial direction. The first protrusion (31a) and the second protrusion (32a) constitute magnetic poles (24) of the magnetic field application unit (20).

When the first protrusion (31a) and the second protrusion (32a) are opposed to the magnetic working substance (11), a magnetic flux flows in the third direction of the magnetic working substance (11), i.e., the vertical direction in FIG. 25. Note that broken arrows indicate the flow of the magnetic flux.

Specifically, in the magnetic refrigerator (10), the magnetic flux flows from the permanent magnet (34) to the first protrusion (31a) of the first core (31). The magnetic flux flows from the first protrusion (31a) toward the upper yoke (13) in FIG. 25. The magnetic flux flows inside the magnetic working substance (11) in the third direction (the vertical direction in FIG. 25) from the upper yoke (13) to the lower yoke (13). The magnetic flux flows from the lower yoke (13) toward the second protrusion (32a) of the second core (32). The magnetic flux flows from the second protrusion (32a) toward the permanent magnet (34). Thus, the magnetic working substance (11) to which the magnetic field is applied generates heat.

Thereafter, the magnetic field application unit (20) is linearly moved so that the first protrusion (31a) and the second protrusion (32a) face an adjacent one of the magnetic working substances (11). As a result, the magnetic working substance (11) to which the magnetic field is first applied absorbs heat when the magnetic field is removed from the magnetic working substance (11). On the other hand, the adjacent magnetic working substance (11) to which the magnetic field is applied generates heat.

### -Second Variation of Third Embodiment-

The magnetic poles (24) of the magnetic field application unit (20) of the third embodiment may be constituted of a first magnet (25) and a magnetic pole projection (51).

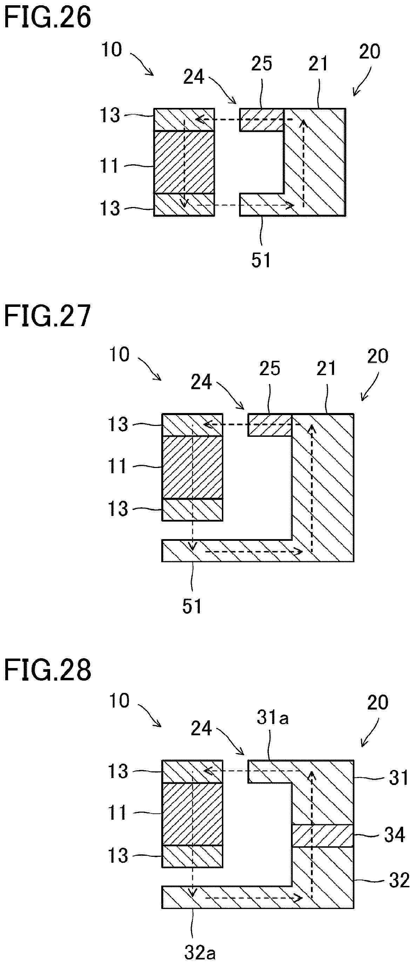

As illustrated in FIG. 26, the magnetic field application unit (20) includes a core (21) and magnetic poles (24). The magnetic poles (24) of the magnetic field application unit (20) are arranged on one side of the magnetic working substance (11) in the second direction (the left-right direction in FIG. 26). The magnetic working substance (11) and the magnetic poles (24) of the magnetic field application unit (20) are spaced from each other in the second direction.

The first magnet (25) and the magnetic pole projection (51) are disposed between the magnetic working substance (11) and the core (21). The magnetic pole projection (51) projects radially inward from a lower end of the core (21). The first magnet (25) and the magnetic pole projection (51) are spaced from each other in the third direction (the vertical direction in FIG. 26). The first magnet (25) and the magnetic pole projection (51) constitute the magnetic poles (24) of the magnetic field application unit (20).

When the first magnet (25) and the magnetic pole projection (51) are opposed to the magnetic working substance (11), a magnetic flux flows in the third direction of the magnetic working substance (11). Broken arrows indicate the flow of the magnetic flux.

### -Third Variation of Second Embodiment-

The magnetic field application unit (20) of the third embodiment may have the magnetic pole (24) arranged on one side of the magnetic working substance (11) in the second direction and the magnetic pole (24) aligned with the magnetic working substance (11) in the third direction.

As illustrated in FIG. 27, the magnetic field application unit (20) includes a core (21) and magnetic poles (24). The magnetic field application unit (20) has the magnetic pole (24) arranged on one side (the right side in FIG. 27) of the magnetic working substance (11) in the second direction (the left-right direction in FIG. 27) and the magnetic pole (24) arranged on one side (the lower side in FIG. 27) of the magnetic working substance (11) in the third direction (the vertical direction in FIG. 27).

A first magnet (25) is arranged between the magnetic working substance (11) and the core (21). The first magnet (25) is spaced from the magnetic working substances (11) in the second direction. The core (21) is provided with a magnetic pole projection (51). The magnetic pole projection (51) projects radially inward from a lower end of the core (21). The magnetic pole projection (51) passes below the magnetic working substance (11) and extends to face the magnetic working substance (11). The magnetic pole projection (51) is spaced from the magnetic working substance (11) in the third direction. The first magnet (25) and the magnetic pole projection (51) constitute the magnetic poles (24) of the magnetic field application unit (20).

When the first magnet (25) and the magnetic pole projection (51) are opposed to the magnetic working substance (11), a magnetic flux flows in the third direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction (the right side in FIG. 27) and the magnetic pole (24) arranged on one side of the magnetic working substance (11) in the third direction (the lower side in FIG. 27). No magnetic pole (24) is provided on the other side in the second direction (the left side in FIG. 27). No magnetic pole (24) is provided on the other side in the third direction (the upper side in FIG. 27).

### -Fourth Variation of Second Embodiment-

The magnetic field application unit (20) of the first variation of the third embodiment may have the magnetic pole (24) arranged on one side of the magnetic working substance (11) in the second direction and the magnetic pole (24) aligned with the magnetic working substance (11) in the third direction.

As illustrated in FIG. 28, the core (30) includes a first core (31), a second core (32), and a permanent magnet (34). The first core (31) and the second core (32) are spaced from each other in the third direction (the vertical direction in FIG. 28). The permanent magnet (34) is sandwiched between the first core (31) and the second core (32).

The first core (31) is provided with a first protrusion (31a). The first protrusion (31a) is spaced from the magnetic working substance (11) in the second direction (the left-right direction in FIG. 28).

The second core (32) is provided with a second protrusion (32a). The second protrusion (32a) passes below the magnetic working substance (11) and extends to face the magnetic working substance (11). The magnetic pole projection (51) is spaced from the magnetic working substance (11) in the third direction. The first protrusion (31a) and the second protrusion (32a) constitute magnetic poles (24) of the magnetic field application unit (20).

When the first protrusion (31a) and the second protrusion (32a) are opposed to the magnetic working substance (11), a magnetic flux flows in the third direction of the magnetic working substance (11). Broken arrows indicate the flow of the magnetic flux.

The magnetic field application unit (20) has the magnetic pole (24) arranged on one side of the magnetic working substance (11) in the second direction orthogonal to the first direction (the right side in FIG. 28) and the magnetic pole (24) on one side of the magnetic working substance (11) in the third direction (the lower side in FIG. 28). No magnetic pole (24) is provided on the other side in the second direction (the left side in FIG. 28). No magnetic pole (24) is provided on the other side in the third direction (the upper side in FIG. 28).

### -Fifth Variation of Third Embodiment-

In the third embodiment, multiple magnetic field application units (20) and multiple magnetic working substances (11) may be arranged and caused to make a relative linear movement by a single cylinder (41).

### «Fourth Embodiment»

A fourth embodiment will be described below.

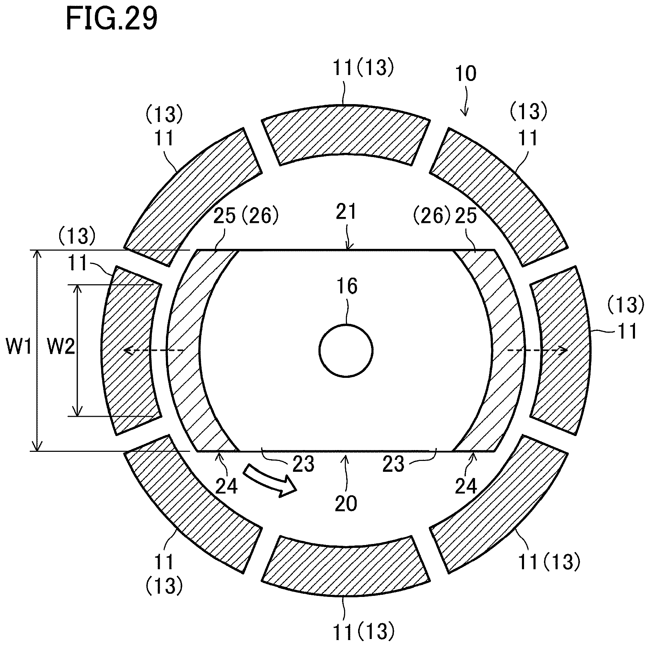

As illustrated in FIG. 29, multiple magnetic working substances (11) are arranged at intervals in the circumferential direction. In the example shown in FIG. 29, eight magnetic working substances (11) extending in an arc shape in the circumferential direction are arranged at equal intervals in the circumferential direction.

The magnetic field application unit (20) is arranged radially inward of the magnetic working substances (11). The magnetic field application unit (20) makes a relative movement with respect to the magnetic working substances (11) in a first direction (a circumferential direction). The magnetic field application unit (20) applies a magnetic field to the magnetic working substances (11).

The magnetic field application unit (20) includes a core (21) and magnetic poles (24). The core (21) has multiple protrusions (23). The protrusions (23) protrude radially outward from a central portion of the core (21). The protrusions (23) are arranged at intervals in the circumferential direction. In the example shown in FIG. 29, two protrusions (23) are arranged at equal intervals in the circumferential direction.

Each of the magnetic poles (24) of the magnetic field application unit (20) is arranged only on one side of the magnetic working substance (11) in a second direction orthogonal to the first direction, i.e., in a radial direction. A first magnet (25) and a second magnet (26) are disposed between the magnetic working substance (11) and each protrusion (23) of the core (21). The first magnet (25) and the second magnet (26) constitute the magnetic poles (24) of the magnetic field application unit (20).

The magnetic poles (24) are spaced from each other in a third direction orthogonal to the first and second directions of the magnetic working substance (11), i.e., an axial direction.

A length W1 in the first direction (the circumferential direction) of a surface of each magnetic pole (24) of the magnetic field application unit (20) facing the magnetic working substance (11) is greater than a length W2 in the first direction (the circumferential direction) of a surface of the magnetic working substance (11) facing the magnetic pole (24) of the magnetic field application unit (20).

### -Advantages of Fourth Embodiment-

According to the features of this embodiment, the length in the first direction of the surface of the magnetic pole (24) of the magnetic field application unit (20) facing the magnetic working substance (11) is greater than the length in the first direction of the surface of the magnetic working substance (11) facing the magnetic pole (24) of the magnetic field application unit (20).

It is thus possible to lower the accuracy of alignment between the magnetic working substance (11) and the magnetic pole (24) of the magnetic field application unit (20) without increasing the magnetic resistance.

### -First Variation of Fourth Embodiment-

The magnetic poles (24) of the magnetic field application unit (20) of the fourth embodiment may be arranged radially outward of the magnetic working substances (11).

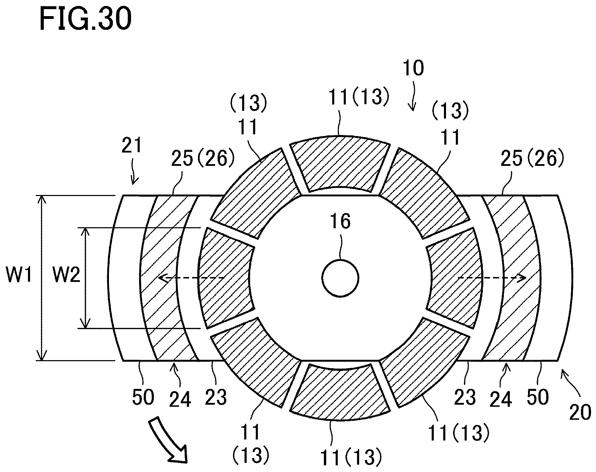

As illustrated in FIG. 30, the magnetic field application unit (20) is arranged radially outward of multiple magnetic working substances (11). The magnetic field application unit (20) includes a core (21) and magnetic poles (24). The core (21) has multiple protrusions (23). Each of the protrusions (23) passes below the magnetic working substances (11) and extends radially outward of the magnetic working substances (11) from the radially inside of the magnetic working substances (11).

Each of the protrusions (23) has a rising portion (50) at its distal end. The rising portion (50) rises along an outer peripheral surface of the magnetic working substance (11) to face the magnetic working substance (11). The rising portion (50) is radially spaced from the magnetic working substance (11).

A first magnet (25) and a second magnet (26) are disposed between the magnetic working substance (11) and the rising portion (50) of the core (21). The first magnet (25) and the second magnet (26) are spaced from each other in the axial direction. The first magnet (25) and the second magnet (26) constitute the magnetic poles (24) of the magnetic field application unit (20). The magnetic working substance (11) and the magnetic poles (24) of the magnetic field application unit (20) are spaced from each other in the radial direction.

When the first magnet (25) and the second magnet (26) are opposed to the magnetic working substance (11), a magnetic flux flows in the axial direction of the magnetic working substance (11). Broken arrows indicate the flow of the magnetic flux.

### -Second Variation of Fourth Embodiment-

In the fourth embodiment, multiple magnetic field application units (20) and multiple magnetic working substances (11) may be arranged in the axial direction and relatively rotated by a single motor (17).

### «Fifth Embodiment»

A fifth embodiment will be described below.

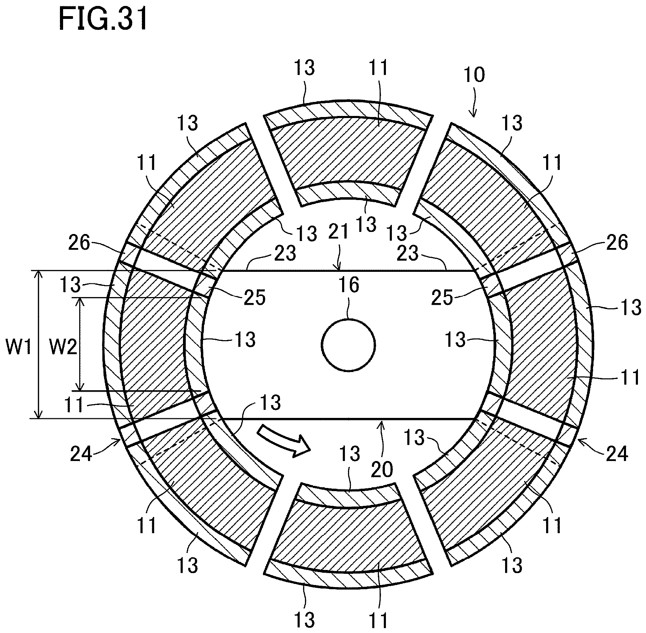

As illustrated in FIG. 31, multiple magnetic working substances (11) are arranged at intervals in the circumferential direction. In the example shown in FIG. 31, eight magnetic working substances (11), each having a substantially fan shape, are arranged at equal intervals in the circumferential direction.

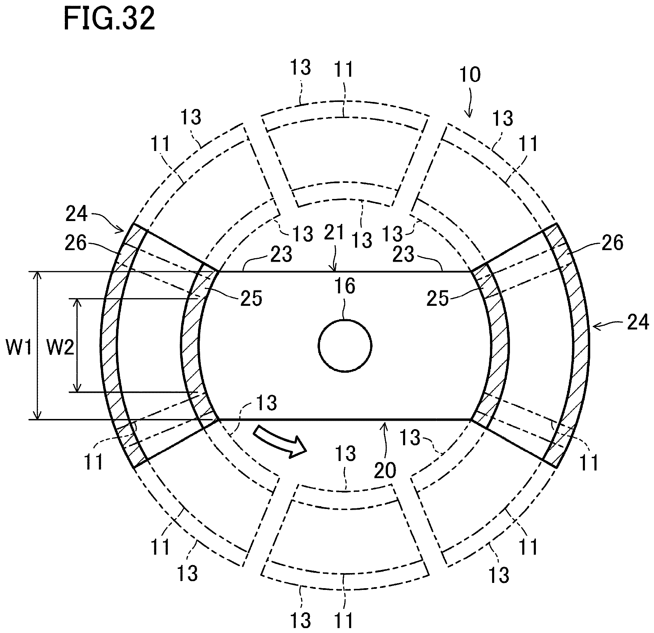

The magnetic field application unit (20) is axially spaced from the magnetic working substances (11). As illustrated also in FIG. 32, the magnetic field application unit (20) makes a relative movement with respect to the magnetic working substances (11) in a first direction (a circumferential direction). The magnetic field application unit (20) applies a magnetic field to the magnetic working substances (11).

The magnetic field application unit (20) includes a core (21) and magnetic poles (24). The core (21) has multiple protrusions (23). The protrusions (23) protrude radially outward from a central portion of the core (21). The protrusions (23) are arranged at intervals in the circumferential direction. In the example shown in FIG. 32, two protrusions (23) are arranged at equal intervals in the circumferential direction. Each of the protrusions (23) has a distal end portion formed in a substantially fan shape when viewed in the axial direction.

The magnetic poles (24) of the magnetic field application unit (20) are arranged on one side of the magnetic working substance (11) in a second direction orthogonal to the first direction, i.e., an axial direction. A first magnet (25) and a second magnet (26) are disposed between the magnetic working substance (11) and each protrusion (23) of the core (21). The first magnet (25) and the second magnet (26) constitute the magnetic poles (24) of the magnetic field application unit (20).

The magnetic poles (24) are spaced from each other in a third direction orthogonal to the first and second directions of the magnetic working substance (11), i.e., a radial direction.

A length W1 in the first direction (the circumferential direction) of a surface of each magnetic pole (24) of the magnetic field application unit (20) facing the magnetic working substance (11) is greater than a length W2 in the first direction (the circumferential direction) of a surface of the magnetic working substance (11) facing the magnetic pole (24) of the magnetic field application unit (20).

### -Advantages of Fifth Embodiment-

According to the features of this embodiment, the length in the first direction of the surface of the magnetic pole (24) of the magnetic field application unit (20) facing the magnetic working substance (11) is greater than the length in the first direction of the surface of the magnetic working substance (11) facing the magnetic pole (24) of the magnetic field application unit (20).

It is thus possible to lower the accuracy of alignment between the magnetic working substance (11) and the magnetic pole (24) of the magnetic field application unit (20) without increasing the magnetic resistance.

### -Variation of Fifth Embodiment-

In the fifth embodiment, multiple magnetic field application units (20) and multiple magnetic working substances (11) may be arranged in the axial direction and relatively rotated by a single motor (17). Alternatively, the multiple magnetic field application units (20) and the multiple magnetic working substances (11) may be arranged in the radial direction and relatively rotated by a single motor (17).

### «Sixth Embodiment»

A sixth embodiment will be described below.

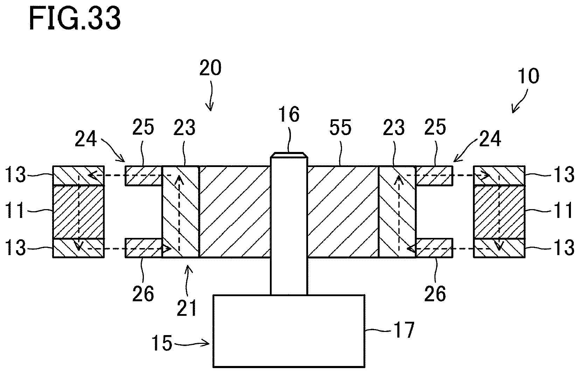

As illustrated in FIG. 33, a magnetic field application unit (20) includes a core (21), magnetic poles (24), and a holding member (55).

The core (21) is made of a magnetic material. The holding member (55) is provided at a central portion of the core (21). The core (21) is held by the holding member (55). The core (21) has multiple protrusions (23). The protrusions (23) protrude radially outward from the central portion of the core (21). Each of the protrusions (23) is radially spaced from the magnetic working substance (11).

The holding member (55) is formed of a cylindrical member. The holding member (55) is made of a non-magnetic material. The holding member (55) is made of, for example, aluminum or resin. A shaft (16) is connected to a central portion of the holding member (55).

A first magnet (25) and a second magnet (26) are disposed between the magnetic working substance (11) and each protrusion (23) of the core (21). The first magnet (25) and the second magnet (26) constitute the magnetic poles (24) of the magnetic field application unit (20). The first magnet (25) and the second magnet (26) are spaced from each other in the axial direction. When the first magnet (25) and the second magnet (26) are opposed to the magnetic working substance (11), a magnetic flux flows in the axial direction of the magnetic working substance (11). Broken arrows indicate the flow of the magnetic flux.

Although an example has been described in the sixth embodiment in which the core (21) made of a magnetic material is held by the holding member (55) made of a non-magnetic material, this example can be applied to other embodiments and variations.

### -Advantages of Sixth Embodiment-

According to the features of this embodiment, the core (21) through which the magnetic flux flows is made of a magnetic material, and the core (21) is held by the holding member (55) made of a non-magnetic material. This can further reduce the leakage of the magnetic flux between the magnetic poles (24) adjacent to each other in the first direction. Further, the weight of the whole magnetic refrigerator (10) can be reduced by using, as the holding member (55), a member that weighs less than the core (21) per unit volume (e.g., aluminum or resin).

### -First Variation of Sixth Embodiment-

The magnetic field application unit (20) of the sixth embodiment may be formed in a cylindrical shape.

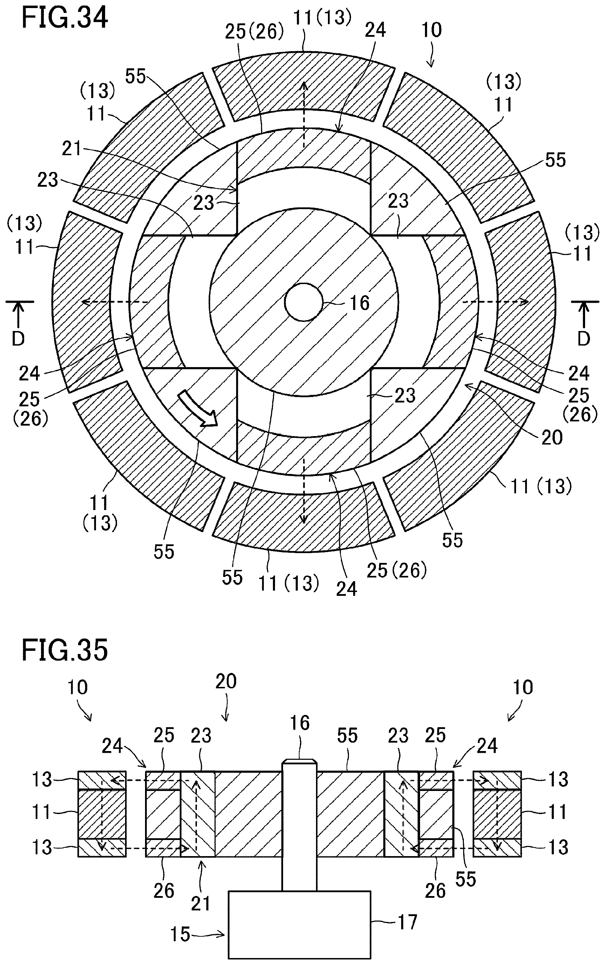

As illustrated in FIGS. 34 and 35, the magnetic field application unit (20) includes a core (21), magnetic poles (24), and a holding member (55).

The core (21) is made of a magnetic material. The holding member (55) is provided at a central portion of the core (21). The core (21) is held by the holding member (55). The core (21) has multiple protrusions (23). The protrusions (23) protrude radially outward from the central portion of the core (21). Each of the protrusions (23) is radially spaced from the magnetic working substance (11).

A first magnet (25) and a second magnet (26) are disposed between the magnetic working substance (11) and each protrusion (23) of the core (21). The first magnet (25) and the second magnet (26) constitute the magnetic poles (24) of the magnetic field application unit (20). The first magnet (25) and the second magnet (26) are spaced from each other in the axial direction. When the first magnet (25) and the second magnet (26) are opposed to the magnetic working substance (11), a magnetic flux flows in the axial direction of the magnetic working substance (11). Broken arrows indicate the flow of the magnetic flux.

The holding member (55) is provided to fill the central portion of the core (21), a space between the protrusions (23) arranged at intervals in the circumferential direction, and a space between the first magnet (25) and the second magnet (26) constituting the magnetic poles (24). The holding member (55) is made of a non-magnetic material. The holding member (55) is made of, for example, aluminum or resin.

The holding member (55) filling the central portion of the core (21) is formed of a cylindrical member. A shaft (16) is connected to the central portion of the holding member (55). The holding member (55) fills the space between the protrusions (23) and the space between the first magnet (25) and the second magnet (26), forming the magnetic field application unit (20) into a cylindrical shape.

### «Other Embodiments»

The above-described embodiments may be modified as follows.

In the above-described embodiments, the first magnet (25) and the second magnet (26) are disposed to face the magnetic working substance (11), but the present invention is not limited to this example. The magnetic poles (24) of the magnetic field application unit (20) may be disposed in any arrangement unless they overlap with the magnetic working substance (11) when viewed in the third direction.

For example, the first magnet (25) and the second magnet (26) constituting the magnetic poles (24) may be disposed outward in the third direction of the magnetic working substance (11) when viewed in the second direction. That is, the magnetic working substance (11) may be arranged in the magnetic gap between the magnetic poles (24) that do not overlap with the magnetic working substance (11) when viewed in the third direction.

In the above-described embodiments, the yokes (13) are provided at both ends of the magnetic working substance (11) in the third direction to uniformly apply the magnetic field to the magnetic working substance (11). However, the present invention is not limited to this example. The magnetic working substance (11) has a higher magnetic permeability than vacuum (air). Thus, the magnetic working substance (11) may have no yokes (13) at both ends in the third direction. Alternatively, the magnetic working substance (11) may have the yoke (13) at one end in the third direction and no yoke (13) at the other end.

Although the magnetic poles (24) of the magnetic field application unit (20) are formed of a permanent magnet in the above-described embodiments, the magnetic poles may be formed of an electromagnet, for example.

Although the number of magnetic poles (24) of the magnetic field application unit (20) and the number of magnetic working substances (11) have been specifically described with reference to the drawings in the above embodiments, the present invention is not limited to the examples. The number of magnetic poles (24) of the magnetic field application unit (20) and the number of magnetic working substances (11) may be determined as appropriate.

Although it has been described in the above-described embodiments that the magnetic field application unit (20) is rotated or linearly moved so that the magnetic field application unit (20) makes a relative movement with respect to the magnetic working substance (11) in the first direction, the present invention is not limited to these examples. The magnetic working substance (11) may be rotated or linearly moved.

Although the shapes of the magnetic working substances (11) and the yokes (13) have been specifically described with reference to the drawings in the above embodiments, the present invention is not limited to the examples. The magnetic working substances (11) and the yokes (13) may have any shape as long as they fit into the space between the magnetic poles (24).

It will be understood that the embodiments and variations described above can be modified with various changes in form and details without departing from the spirit and scope of the claims. The embodiments and variations described above may be appropriately combined or modified by replacing the elements thereof, as long as the functions of the subject matters of the present disclosure are not impaired. In addition, the expressions of "first," "second," "third" and so on in the specification and claims are used to distinguish the terms to which these expressions are given, and do not limit the number and order of the terms.

### INDUSTRIAL APPLICABILITY

As can be seen from the foregoing description, the present disclosure is useful for a magnetic refrigerator and a refrigeration apparatus.

### DESCRIPTION OF REFERENCE CHARACTERS

- 1: Refrigeration Apparatus
- 2: Heating Medium Circuit
- 10: Magnetic Refrigerator
- 11: Magnetic Working Substance
- 13: Yoke
- 20: Magnetic Field Application Unit
- 24: Magnetic Pole

## Claims

1. A magnetic refrigerator, comprising:
a magnetic working substance (11); and
a magnetic field application unit (20) that makes a relative movement with respect to the magnetic working substance (11) in a first direction and applies a magnetic field to the magnetic working substance (11), wherein
the magnetic field application unit (20) has magnetic poles (24) that are arranged on one side of the magnetic working substance (11) in a second direction orthogonal to the first direction and are spaced from each other in a third direction orthogonal to the first and second directions of the magnetic working substance (11).

2. The magnetic refrigerator of claim 1, wherein
the relative movement is a relative rotational movement about a predetermined axis,
the first direction is a circumferential direction, the second direction is a radial direction, and the third direction is an axial direction,
the magnetic working substance (11) and the magnetic poles (24) of the magnetic field application unit (20) are spaced from each other in the radial direction, and
the magnetic poles (24) of the magnetic field application unit (20) are spaced from each other in the axial direction.

3. The magnetic refrigerator of claim 1, wherein
the relative movement is a relative rotational movement about a predetermined axis,
the first direction is a circumferential direction, the second direction is an axial direction, and the third direction is a radial direction,
the magnetic working substance (11) and the magnetic poles (24) of the magnetic field application unit (20) are spaced from each other in the axial direction, and
the magnetic poles (24) of the magnetic field application unit (20) are spaced from each other in the radial direction.

4. The magnetic refrigerator of claim 1, wherein
the relative movement is a relative linear movement in the first direction,
the magnetic working substance (11) and the magnetic poles (24) of the magnetic field application unit (20) are spaced from each other in the second direction, and
the magnetic poles (24) of the magnetic field application unit (20) are spaced from each other in the third direction.

5. The magnetic refrigerator of any one of claims 1 to 4, wherein
the magnetic working substance (11) is provided with yokes (13) having a higher magnetic permeability than the magnetic working substance (11) at both ends in the third direction.

6. The magnetic refrigerator of any one of claims 1 to 5, wherein
a length in the first direction of a surface of each magnetic pole (24) of the magnetic field application unit (20) facing the magnetic working substance (11) is greater than a length in the first direction of a surface of the magnetic working substance (11) facing the magnetic poles (24) of the magnetic field application unit (20).

7. A refrigeration apparatus, comprising:
the magnetic refrigerator (10) of any one of claims 1 to 6; and
a heating medium circuit (2) configured to exchange heat with the magnetic refrigerator (10).
